# EUROPÄISCHE PATENTSCHRIFT

(11) **EP 1 056 582 B1**
(45) Veröffentlichungstag und Bekanntmachung des Hinweises auf die Patenterteilung: **06.05.2004**
(21) Anmeldenummer: 98958724.1
(22) Anmeldetag: 10.12.1998
(51) Int. Cl.: B29C 45/42

(54) **ENTFORMUNGS- UND TRANSPORTEINRICHTUNG MIT WERKSTÜCKTRÄGER**
REMOVAL AND CONVEYOR DEVICE WITH WORK PIECE HOLDERS
DISPOSITIF DE DEMOULAGE ET DE TRANSPORT AVEC PORTE-PIECE

(30) Priorität: 12.12.1997 AT 209597
(43) Veröffentlichungstag der Anmeldung: 06.12.2000
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter, Dr.
(86) Internationale Anmeldenummer: PCT/AT1998/000302
(87) Internationale Veröffentlichungsnummer: WO 1999/030891

(56) Entgegenhaltungen:
- EP-A- 0 108 333
- EP-A- 0 679 493
- EP-A- 0 808 703
- DE-A- 3 034 429
- US-A- 3 454 991
- US-A- 4 832 592

## Beschreibung

Die Erfindung betrifft eine Transporteinrichtung für Formteile, wie beispielsweise Spritzgußteile, Preßteile, Ziehteile, wie sie im Oberbegriff des Anspruches 1 beschrieben ist.

Aus der US 4,201,535 A ist eine Anlage zur Herstellung von Spritzgußteilen bekannt, die eine Transporteinrichtung, eine Kühl- und Auswerfstation und eine Formstation aufweist. Die Transporteinrichtung weist eine der Höhe nach verstellbare und um eine vertikale Achse drehbare Montageaufnahme 52, 53 auf, an der diametral gegenüberliegend zwei Sätze von radial verlaufenden Kernstiften 60, 62 befestigt sind, die taktweise aufeinanderfolgend wahlweise entweder zu Nestteilen bzw. Formhälften 35, 36 des Formwerkzeuges oder zur Kühl- und Auswerfstation relativ verstellbar sind. Das Formwerkzeug weist die beiden genannten, in vertikaler Richtung relativ zueinander verstellbaren Nestteile mit jeweils einem Formnest auf, die während des Verschwenkens der auf der Montageaufnahme angeordneten Kernstifte auseinander bewegt und nach dem Positionieren des Kernstiftes 60 gegenüber den beiden Formnestern geschlossen werden, sodass zwischen den Formnestern des Formwerkzeuges und dem eingeschwenkten Kernstift 60 ein Formhohlraum 32 ausgebildet ist, innerhalb welchem der plastifizierte Kunststoff eingebracht wird. Der erstarrte Spritzgußteil wird vom jeweiligen Kernstift aufgenommen. Um eine ausreichende Positionierung des zwischen den Formhälften verschwenkten Kernstiftes 60 gegenüber den Formnestern zu erreichen, ist in dem der Montageaufnahme benachbarten Endbereich der Kernstifte je ein Zentrierring 63 zusätzlich ausgebildet, der in der eingeschwenkten Stellung des Kernstiftes in eine zum Formnest der beiden Nestteile getrennt angeordnete Ausnehmung 40 formschlüssig eingreift.

Aus der EP 0 397 674 B1 desselben Anmelders ist eine Anlage zur Herstellung von Formteilen aus Kunststoff bekannt, welche eine Abgabevorrichtung für den Kunststoff, ein mehrteiliges Werkzeug mit einem Basiswerkzeugteil und einem Mobilwerkzeugteil und eine Ausstoßvorrichtung für die Formteile aufweist. Die Anlage besitzt weiters unabhängig voneinander verfahrbare Werkstückträger, auf denen gleichwertige Mobilwerkzeugteile angeordnet sind, welche mit Heiz- und/oder Kühlkreisläufen versehen sind. Dem Werkstückträger ist in einem, dem Basiswerkzeugteil zugeordneten Arbeitsbereich eine Positioniervorrichtung zugeordnet. Der Mobilwerkzeugteil und der Basiswerkzeugteil sind über eine Verstellvorrichtung relativ zueinander verstellbar gelagert. Nachteilig bei dieser Anlage ist, daß der Mobilwerkzeugteil mit dem diesem zugeordneten Heiz- und/oder Kühlkreislauf sowie Teilen der Positioniervorrichtung und der Verstellvorrichtung versehen ist, wodurch dieser eine große Masse zu transportieren hat. Dies wirkt sich unvorteilhaft auf Taktzeiten, Standfestigkeit und Herstell- bzw. Instandhaltungskosten aus.

Des weiteren ist aus der US 4,832,592 A eine Vorrichtung zur Erzeugung hohler Objekte bekannt, die eine Beschickungsstation und eine Formstation aufweist, zwischen welchen ein über eine Antriebseinrichtung entlang einer Führungsvorrichtung verfahrbarer Werkstückträger vorhanden ist. Der Werkstückträger bildet einen Nestteil 18 aus. Auf einem Tragrahmen der Vorrichtung sind dem Nestteil 18 zugewandt ein Kernteil 34 und Flaschenhalssegmente 70a, 70b zur Erzeugung eines Flaschenhalses sowie Mittel für die Relativbewegung der Flaschenhalssegmente in zum Kernteil radialer Richtung und des Kernteils in Richtung seiner Längserstreckung angeordnet. Der Nestteil wird in der Beschickungsstation mit plastifiziertem Kunststoff gefüllt und darauffolgend über die Antriebseinrichtung zu der Formstation verfahren, in der durch Relativverstellung des Kernteiles zu dem Nestteil der Formteil ausgeformt wird. Danach werden die Flaschenhalssegmente in radialer Richtung zur Längsachse des Kemteils auseinanderbewegt und der verfestigte Formteil auf eine Förderrutsche 89 ungeordnet abgeworfen. Nachteilig sind der hohe maschinelle Aufwand und die hohe Taktzeit in der Beschickungsstation.

Aus der EP 0 108 333 A ist ein Formwerkzeug bekannt, welches eine zwischen den Formteilen relativ verschiebbare Auswerferplatte aufweist. Diese dient aber nur zum ungeordneten Ausgeben der hergestellten Spritzgußteile innerhalb des Formwerkzeuges und kann nicht in eine außerhalb des Formwerkzeuges befindliche Position gebracht werden. Nachteilig ist hierbei, daß entweder die unorientierten Formteile orientiert und zur Weiterbearbeitung geordnet und zusammengeführt werden müssen, oder zwischen den geöffneten Formteilen des Formwerkzeuges Entnahmeteile eingeführt und entnommen werden müssen, bevor das Formwerkzeug wieder geschlossen werden kann. Dadurch ist die Taktzeit derartiger Vorrichtungen und die Gefahr von Beschädigungen bei nicht hundertprozentig synchronem Lauf der Formwerkzeuge sehr hoch.

Die Erfindung betrifft weiters ein Formwerkzeug zur Herstellung von Formteilen, wie es im Oberbegriff des Anspruches 32 beschrieben ist.

Es sind bereits verschiedenste Ausführungen von Formwerkzeugen für Spritzgußteile bekannt, die aus einem Kemteil und Nestteil bestehen, welche relativ beweglich zueinander ausgebildet sind. Der Kernteil weist meist einen oder mehrere starre und/oder bewegliche Kerne auf. Im Nestteil sind ein oder mehrere Formnester angeordnet.

Nachteilig bei diesen Formwerkzeugen ist, daß beim Entformen der Spritzgußteile diese ungeordnet in Aufnahmebehälter fallen und zum Zwecke einer allenfalls erfolgenden Weiterverarbeitung in Montage- und/oder Fertigungsanlagen einem Sortiervorgang zugeführt werden müssen. Andere Ausbildungen derartiger Formwerkzeuge weisen Handhabungsvorrichtungen auf, welche jedoch erst bei vollständiger Entformung der Spritzgußteile aus einem dem Formwerkzeug vorgelagerten Bereich in das Formwerkzeug eingeführt werden, worauf die Spritzgußteile aus dem Nestteil oder dem Kernteil entnommen werden und lageorientiert aus dem Formwerkzeug zum Zwecke der Weiterverarbeitung in einer Montage- und/oder Fertigungsanlage wegtransportiert werden. Nachteilig bei diesen Ausführungsvarianten sind die langen Verfahrwege der Handhabungsvorrichtungen, wodurch sich große Teilungsabstände zwischen diesen, insbesondere bei starr verketteten Handhabungsvorrichtungen, ergeben, die sich nachteilig auf Taktzeiten einer Montage- und/oder Fertigungsanlage auswirken.

Die Erfindung betrifft schließlich noch ein Verfahren zum Transport von Formteilen, insbesondere von Spritzgußteilen, wie es im Oberbegriff des Anspruches 33 beschrieben ist.

Bei derartig üblichen Verfahren wird ein Formwerkzeug, insbesondere ein Spritzgußwerkzeug, bestehend aus einem Kernteil und einem Nestteil geschlossen, worauf Kunststoff in Formhohlräume eingebracht wird und sich verfestigt und im Anschluß das Formwerkzeug durch Relativbewegung des Nestteils und/oder des Formteils geöffnet wird, worauf die Spritzgußteile freigegeben und über Werkstückaufnahmevorrichtungen aus dem Spritzbereich des Formwerkzeuges abtransportiert werden. Nachteilig ist dabei, wie bereits ausgeführt, daß entweder die Formteile ungeordnet vom Kemteil oder aus dem Nestteil fallen oder beim Einsatz von Werkstückaufnahmevorrichtungen große Verfahrwege erforderlich sind, um letztere aus einem dem Formwerkzeug vorgeordneten Bereich durch das geöffnete Formwerkzeug hindurch in einen dem Formwerkzeug nachgeordneten Bereich zu transportieren.

Aufgabe der Erfindung ist es nun, eine Transporteinrichtung, ein Werkzeug und ein Verfahren zu schaffen, bei der die Masse der bewegten Teile sowie die Verfahrwege der Werkstückträger und Werkstückaufnahmevorrichtungen reduziert und folglich Taktzeiten, insbesondere einer Herstellungs- und Montageanlage für Formteile, beispielsweise für Spritzgußteile, verkürzt werden.

Die Aufgabe der Erfindung wird durch die im Kennzeichenteil des Anspruches 1 wiedergegebenen Merkmale gelöst. Der überraschende Vorteil dabei ist, daß die Werkstückaufnahmevorrichtung während des Formvorganges bereits in einer Ausnehmung eines Formwerkzeuges positionierbar ist, wodurch entweder die Formteile, insbesondere die Spritzgußteile unmittelbar während des Spritzvorganges von der jeweiligen Werkstückaufnahmevorrichtung aufgenommen werden können oder aber der Verfahrweg der jeweiligen Werkstückaufnahmevorrichtung aus der im Formwerkzeug gelegenen Warteposition in den Bereich der Spritzposition verkürzt ist, wodurch Taktzeiten reduziert werden. Zudem kommt, daß im Schließzustand des Formwerkzeuges einerseits über die in der Ausnehmung positionierte Werkstückaufnahmevorrichtung der Formhohlraum dicht verschlossen wird sowie das plastifizierte Spritzgußmaterial während des Formvorganges nicht aus dem Formhohlraum ausfließen kann und andererseits eine exakte Zentrierung der Werkstückaufnahmevorrichtung im Formwerkzeug erreicht wird.

Vorteilhaft ist auch die Weiterbildung nach Anspruch 2, wodurch eine einfache Werkstückaufnahmevorrichtung vorzugsweise für rotationssymmetrische Formteile geschaffen wird, welche rasch vom Werkstückträger getrennt und ausgetauscht werden kann.

Von Vorteil ist eine Ausführung nach Anspruch 3, durch welche eine einfache Fertigung des Formwerkzeuges erreicht wird.

Durch die Weiterbildung nach Anspruch 4 wird in einfacher Weise die Möglichkeit geschaffen, die Werkstückaufnahmevorrichtung trotz der notwendigen Möglichkeit des Schließens des Formwerkzeuges bewegungsfest mit dem Werkstückträger zu verbinden.

Vorteilhaft ist auch die Ausführungsvariante nach Anspruch 5, durch die der Formhohlraum im Formwerkzeug über die in diesem integrierte Werkstückaufnahmevorrichtung zuverlässig abgedichtet wird.

Von Vorteil ist eine Ausführungsvariante nach Anspruch 6, wodurch eine besondere Formgebung des Formteiles auch auf der dem Formnest des Formwerkzeuges entgegengesetzten Seite der Werkstückaufnahmevorrichtung möglich ist.

Eine günstige Weiterbildung beschreibt Anspruch 7, bei der die Werkstückaufnahmevorrichtung sowohl im Kernteil als auch im Nestteil des Formwerkzeuges angeordnet werden kann.

Vorteilhaft ist auch die Ausführungsvariante nach Anspruch 8, welche es ermöglicht, die Werkstückaufnahmevorrichtung mit möglichst geringem Abstand zum Werkstückträger anzuordnen.

Die Ausführungen nach den Ansprüchen 9 und 10 ermöglichen in einfacher Weise eine relativbewegliche Anordnung der Werkstückaufnahmevorrichtung am Werkstückträger.

Vorteilhaft sind die Varianten nach den Ansprüchen 11 bis 16, durch welche eine exakte Zentrierung der Werkstückaufnahmevorrichtung im Werkstückträger und damit eine Positioniergenauigkeit des in der Werkstückaufnahmevorrichtung angeordneten Formteiles entlang der Transporteinrichtung ermöglicht wird. Ferner wird durch die Merkmale gemäß Anspruch 13 ein Austreten vom plastifizierten Spritzgußmaterial aus dem Formhohlraum während des Spritzvorganges vermieden. Nach einer vorteilhaften Ausführung weist die Werkstückaufnahmevorrichtung einen in einer Bohrung relativ zum Formwerkzeug beweglichen Dom auf, mittels dem der erstarrte Formteil besonders einfach von der Werkstückaufnahmevorrichtung entfernt werden kann. Das plastifizierte Spritzgußmaterial fließt dabei bis zur kegelförmigen Spitze des Dornes, sodass nach dem Verfestigen des Spritzgußmaterials ein Haltesteg für den Formteil ausgebildet ist und der Formteil bewegungsfest sowie lageorientiert mit der Werkstückaufnahmevorrichtung und/oder dem Werkstückträger verbunden ist.

Durch die Weiterbildungen nach den Ansprüchen 17 und 18 ist es möglich, die im Verlauf der Transporteinrichtung hintereinander angeordneten Werkstückaufnahmevorrichtungen mit geringen Abständen zueinander anzuordnen und damit Taktzeiten und Fertigungszeiten zu reduzieren.

Von Vorteil ist eine Ausführung nach Anspruch 19, durch welche auch die Aufnahme unterschiedlichster Formteile ermöglicht wird.

Vorteilhaft ist dabei eine Weiterbildung nach Anspruch 20, bei der eine Entnahme des Formteiles aus dem Formwerkzeug in einfacher Weise möglich wird.

Günstig ist aber auch eine Ausführungsvariante nach Anspruch 21, durch welche die Manipulationszeiten für die Aufnahme der Formteile reduziert werden.

Im Anspruch 22 ist eine mögliche Ausbildung beschrieben, welche in einfacher Weise eine zusätzliche Bewegungsmöglichkeit der Werkstückaufnahmevorrichtung und damit eine größere Flexibilität gewährleistet.

Von Vorteil sind auch die Weiterbildungen nach den Ansprüchen 23 und 24, welche eine lösbare Verbindung der Werkstückaufnahmevorrichtung und des Formteiles erlauben und gleichzeitig letzterer geklemmt und exakt positioniert werden kann.

Die Varianten nach den Ansprüchen 25 und 26 haben sich deshalb als vorteilhaft erwiesen, da die Formteile außen umfaßt werden können und somit Manipulationszeiten reduziert werden.

Möglich ist eine Ausführungsvariante nach Anspruch 27, bei der die Werkstückaufnahmevorrichtung durch einen Aufnahmezapfen gebildet wird, der einen Teil des Formwerkzeuges ausbildet und von dem der Formteil in einfacher Weise getrennt werden kann.

Die Ausbildung gemäß Anspruch 28 hat den Vorteil, daß diesem Aufnahmezapfen zusätzliche Bewegungsmöglichkeiten eingeräumt werden. Dazu kommt, daß durch den verschwenkbaren Aufnahmezapfen im Zusammenwirken mit dem Formwerkzeug am Aufnahmezapfen ein Anspritzbereich für das Spritzgußmaterial des Formteiles gebildet und dieses beim Erstarren mit dem Aufnahmezapfen, d.h. der Werkstückaufnahmevorrichtung, verbunden ist, wodurch der Manipulations- und Fertigungsaufwand reduziert wird.

Von Vorteil sind aber auch die Ausführungsvarianten der Ansprüche 29 bis 31, bei denen ein Teil des Formwerkzeuges durch dessen Relativbewegung die Werkstückaufnahmevorrichtung mittransportiert, wodurch zusätzliche Montageteile vermieden werden und damit die zu bewegende Masse des Werkstückträgers reduziert wird.

Die Aufgabe der Erfindung wird aber auch durch die im Kennzeichenteil des Anspruches 32 wiedergegebenen Merkmale gelöst. Der überrasche Vorteil dabei ist, daß bereits während des Spritzvorganges der Formteil, insbesondere der Spritzgußteil, von der Werkstückaufnahmevorrichtung aufgenommen wird oder aber im Falle des Verweilens der Werkstückaufnahmevorrichtung in einer Warteposition während des Spritzvorganges in kurzer Zeit nach dem Entformen aus dem Formwerkzeug entfernt werden kann.

Schließlich wird die Aufgabe der Erfindung aber auch durch die im Kennzeichenteil des Anspruches 33 wiedergegebenen Merkmale und Maßnahmen gelöst, deren Vorteile den Vorteilen der Merkmale der Kennzeichenteile der Ansprüche 1 und 32 entsprechen.

Zum besseren Verständnis der Erfindung wird diese im nachfolgenden anhand der in den Zeichnungen gezeigten Ausführungsbeispiele näher erläutert.

Es zeigen:
- Fig. 1: eine erfindungsgemäße Transporteinrichtung bzw. ein erfindungsgemäßes Werkzeug bzw. eine erfindungsgemäße Werkstückaufnahmevorrichtung im Entformungszustand, geschnitten, in der Stirnansicht;
- Fig. 2: die erfindungsgemäße Transporteinrichtung bzw. das erfindungsgemäße Werkzeug bzw. die erfindungsgemäße Werkstückaufnahmevorrichtung im Entformungszustand, geschnitten gemäß den Linien II-II in Fig. 1;
- Fig. 3: die erfindungsgemäße Transporteinrichtung bzw. die erfindungsgemäße Werkstückaufnahmevorrichtung, geschnitten gemäß der Linien III-III in Fig. 1;
- Fig. 4: eine andere Ausführungsvariante der erfindungsgemäßen Transporteinrichtung bzw. des erfindungsgemäßen Werkzeuges bzw. der erfindungsgemäßen Werkstückaufnahmevorrichtung im Entformungszustand, geschnitten, in der Stirnansicht;
- Fig. 5: die erfindungsgemäße Transporteinrichtung bzw. das erfindungsgemäße Werkzeug bzw. die erfindungsgemäße Werkstückaufnahmevorrichtung im Formzustand, geschnitten, in der Stirnansicht;
- Fig. 6: die erfindungsgemäße Transporteinrichtung bzw. das erfindungsgemäße Werkzeug bzw. die erfindungsgemäße Werkstückaufnahmevorrichtung im Entformungszustand, geschnitten, in der Stirnansicht;
- Fig. 7: die erfindungsgemäße Transporteinrichtung bzw. die erfindungsgemäße Werkstückaufnahmevorrichtung, geschnitten gemäß der Linien VII-VII in Fig. 6;
- Fig. 8: eine andere Ausführungsvariante der erfindungsgemäßen Transporteinrichtung bzw. des erfindungsgemäßen Werkzeuges bzw. der erfindungsgemäßen Werkstückaufnahmevorrichtung im Formzustand, geschnitten, in der Stirnansicht;
- Fig. 9: die erfindungsgemäße Transporteinrichtung bzw. das erfindungsgemäße Werkzeug bzw. die erfindungsgemäße Werkstückaufnahmevorrichtung, geschnitten gemäß den Linien IX-IX in Fig. 8;
- Fig. 10: eine weitere Ausführungsvariante einer erfindungsgemäßen Transporteinrichtung bzw. eines erfindungsgemäßen Werkzeuges bzw. einer erfindungsgemäßen Werkstückaufnahmevorrichtung, im Entformungszustand, geschnitten, in der Stirnansicht;
- Fig. 11: die erfindungsgemäße Transporteinrichtung bzw. das erfindungsgemäße Werkzeug bzw. die erfindungsgemäße Werkstückaufnahmevorrichtung, geschnitten gemäß den Linien XI-XI in Fig. 10;
- Fig. 12: eine erfindungsgemäße Werkstückaufnahmevorrichtung, geschnitten gemäß den Linien XII-XII in Fig. 10;
- Fig. 13: eine weitere Ausführungsvariante der erfindungsgemäßen Transporteinrichtung bzw. des erfindungsgemäßen Werkzeuges bzw. der erfindungsgemäßen Werkstückaufnahmevorrichtung im Formzustand, geschnitten, in der Stirnansicht;
- Fig. 14: die erfindungsgemäße Transporteinrichtung bzw. das erfindungsgemäße Werkzeug bzw. die erfindungsgemäße Werkstückaufnahmevorrichtung, im Entformungszustand, geschnitten, in der Stirnansicht;
- Fig. 15: das erfindungsgemäße Werkzeug bzw. die erfindungsgemäße Werkstückaufnahmevorrichtung, geschnitten gemäß den Linien XV-XV in Fig. 13;
- Fig. 16: das erfindungsgemäße Werkzeug bzw. die erfindungsgemäße Werkstückaufnahmevorrichtung, geschnitten gemäß den Linien XVI-XVI in Fig. 15;
- Fig. 17: eine andere Ausführungsvariante der erfindungsgemäßen Transporteinrichtung bzw. des erfindungsgemäßen Werkzeuges bzw. der erfindungsgemäßen Werkstückaufnahmevorrichtung im Formzustand, geschnitten, in der Stirnansicht;
- Fig. 18: die erfindungsgemäße Transporteinrichtung bzw. das erfindungsgemäße Werkzeug bzw. die erfindungsgemäße Werkstückaufnahmevorrichtung, geschnitten gemäß den Linien XVIII-XVIII in Fig. 17.

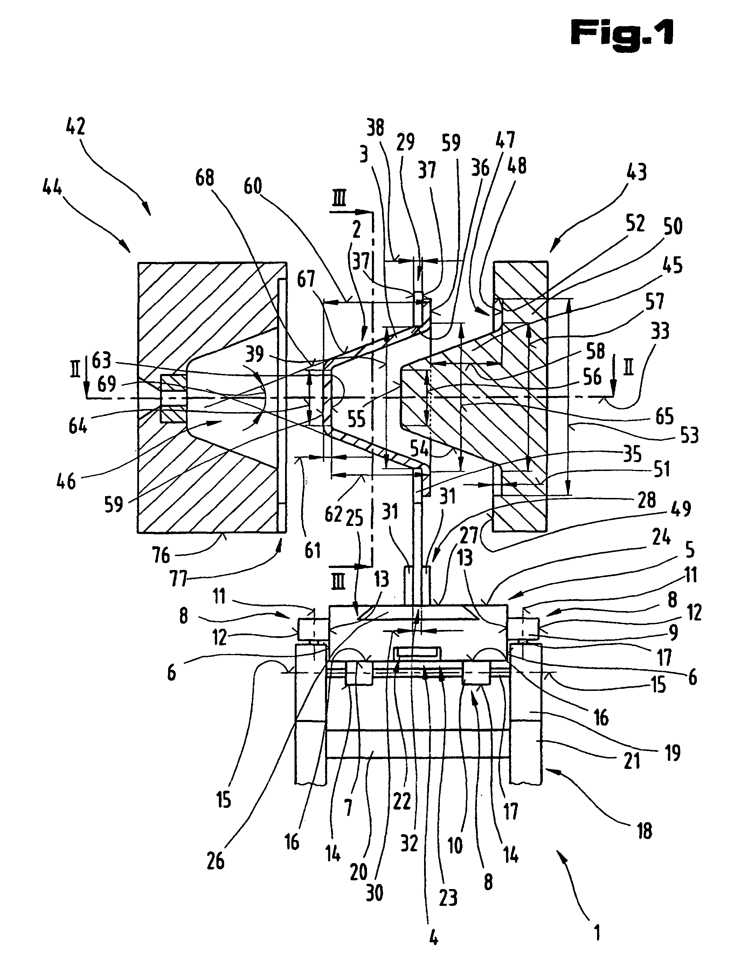

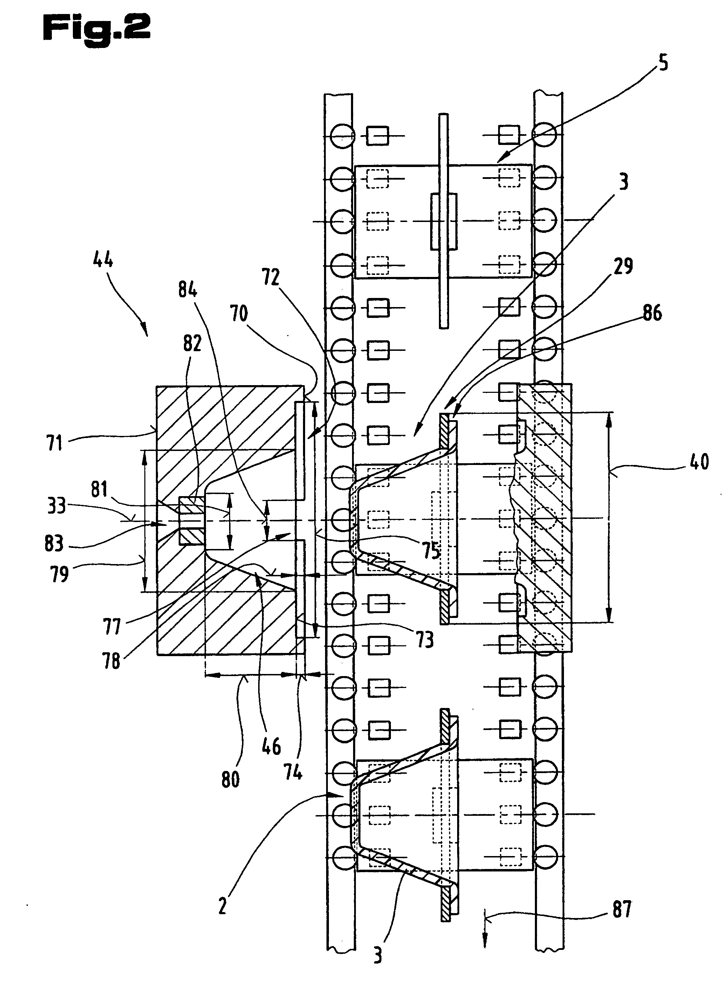

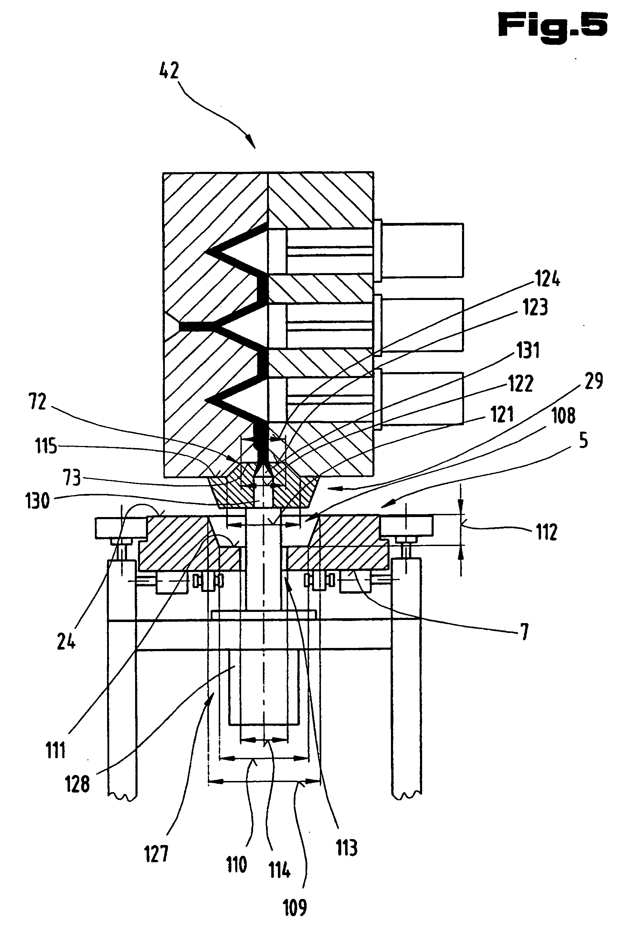

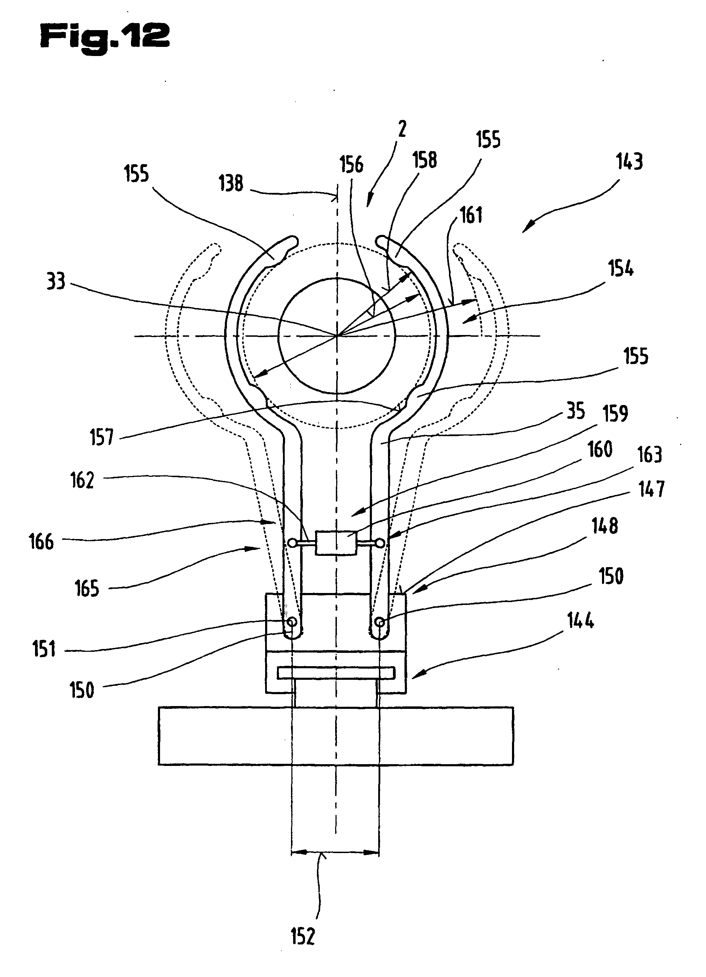

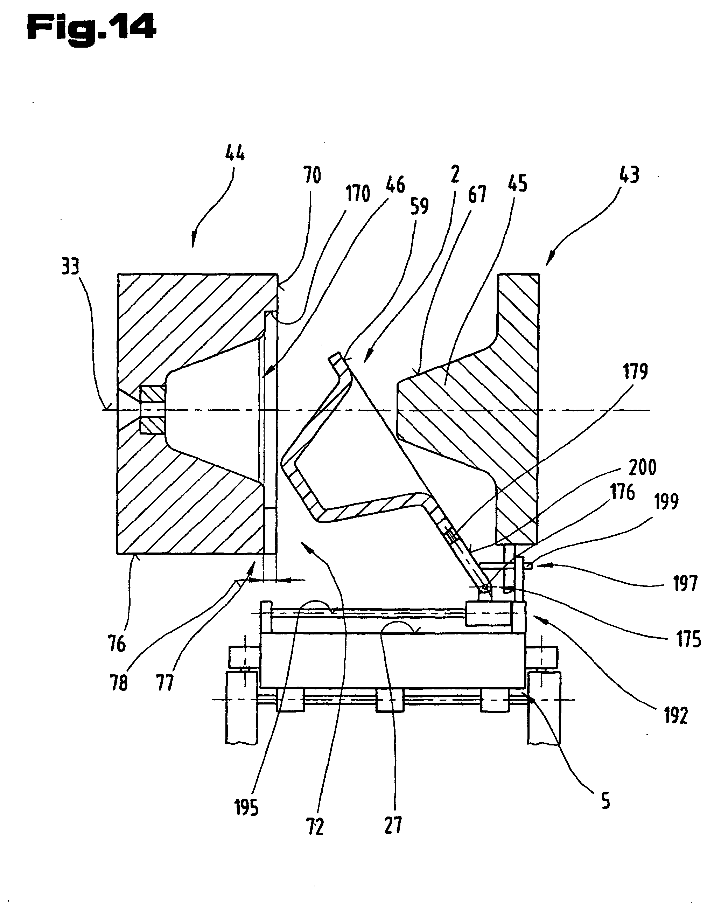

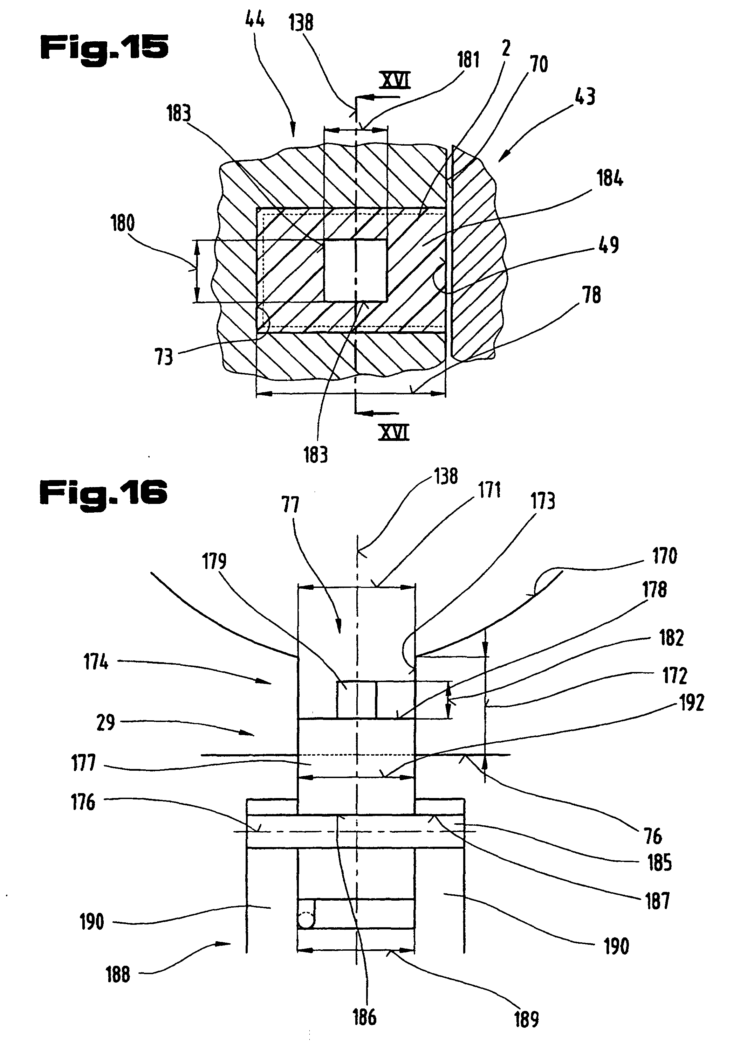

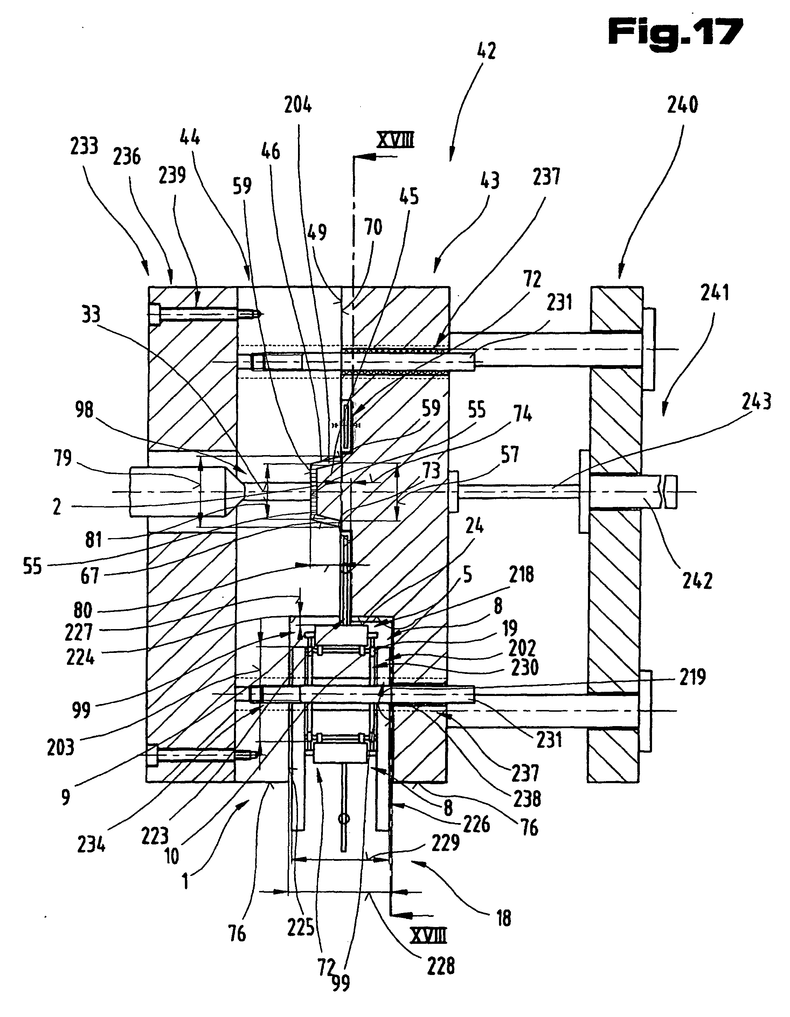

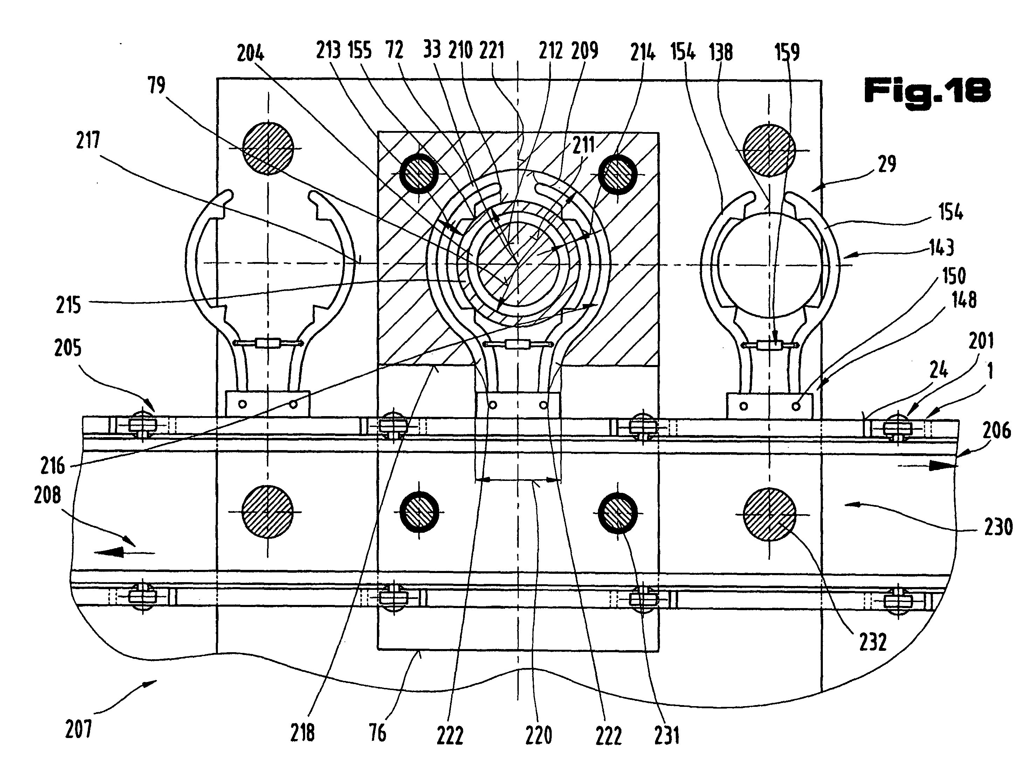

Einleitend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Weiters können auch Einzelmerkma le aus den gezeigten unterschiedlichen Ausführungsbeispielen für sich eigenständige, erfindungsgemäße oder erfinderische Lösungen darstellen. Weiters soll vorab erwähnt werden, daß die Fig. 1 bis 16 die Transporteinrichtung 1 mit dem Werkzeug und der Werkstückträgervorrichtung 29 bzw. Details derselben zeigen, während in den Fig. 17 und 18 die Gesamtanordnung der Transporteinrichtung 1 und eine Spritzgußeinrichtung dargestellt ist.

In den gemeinsam beschriebenen Fig. 1 bis 3 ist eine Transporteinrichtung 1, insbesondere für Herstellungs- und Montageanlagen von Werkstücken 2, wie beispielsweise Spritzgußteile 3, Preßteile, Ziehteile, gezeigt. Die Transporteinrichtung 1 besitzt mehrere über eine oder mehrere Antriebseinrichtungen 4 bewegte Werkstückträger 5. Diese besitzen parallel zueinander und einander abgewandte Längsstirnflächen 6 und eine rechtwinkelig zu diesen verlaufende Unterseite 7. Den Längsstirnflächen 6 und/oder der Unterseite 7 zugeordnet befinden sich Führungsvorrichtungen 8, welche beispielsweise durch Vertikalrollen 9 oder Horizontalrollen 10 gebildet werden. Die Vertikalrollen 9 besitzen vertikale, parallel zu den Längsstirnflächen 6 verlaufende Vertikaldrehachsen 11, wobei Laufflächen 12 der Vertikalrollen 9 konzentrisch um die Vertikaldrehachsen 11 umlaufen und Seitenführungsbahnen 13 für die Werkstückträger 5, insbesondere für die parallel zu diesen verlaufenden Längsstirnflächen 6, ausbilden. Die Horizontalrollen 10 weisen Laufflächen 14 auf, welche konzentrisch um eine rechtwinkelig zur Vertikaldrehachse 11 verlaufende Horizontaldrehachse 15 angeordnet sind und eine Höhenführungsbahn 16 für den Werkstückträger 5 ausbilden. Die Horizontalrollen 10 und die Vertikalrollen 9 sind über Achselemente 17 in einem Gestell 18 der Transporteinrichtung 1 drehbeweglich gelagert.

Das Gestell 18 besteht aus Längsprofilen 19 und/oder Querprofilen 20 und/oder Höhenprofilen 21. Die Antriebseinrichtung 4 ist beispielsweise als Riemenantrieb mit einem Riemen 22 ausgebildet, welcher in einer nutförmigen Vertiefung 23 des Werkstückträgers 5 angeordnet ist. Dabei kann der Riemen 22 beispielsweise als Zahnriemen ausgebildet sein, welcher in eine in der Vertiefung 23 angeordnete Verzahnung des Werkstückträgers 5 eingreift. Darüber hinaus ist es aber auch möglich, die Führungsvorrichtungen 8 als Antriebseinrichtung 4 auszubilden, wobei in diesem Falle die Vertikalrollen 9 und/oder die Horizontalrollen 10 angetrieben werden können. Dadurch kann eine lose Verkettung der Werkstückträger 5 erreicht werden, welche im Gegensatz zu einer, durch den Riemenantrieb erreichten, starren Verkettung eine Relativbeweglichkeit der Werkstückträger 5 zueinander ermöglicht. Schließlich können auch die einzelnen Werkstückträger 5 jeweils mit einer eigenen Antriebseinrichtung 4 versehen sein.

Der Werkstückträger 5 besitzt beispielsweise eine, eine parallel zur Unterseite 7 verlaufende Oberseite 24 in Richtung zur Unterseite 7 überragende Vertiefungsnut 25, welche beispielsweise schwalbenschwanzförmig ausgebildet ist. In dieser Vertiefungsnut 25 befindet sich, lösbar oder unlösbar angeordnet, ein Einsatzelement 26, dessen der Unterseite 7 abgewandte und beispielsweise in einer Ebene mit der Oberseite 24 liegende Oberfläche 27 eine Verbindungsvorrichtung 28 für eine Werkstückaufnahmevorrichtung 29 aufweist. Die Verbindungsvorrichtung 28 wird beispielsweise durch zwei in einem Abstand 30 voneinander distanzierte Stege 31 gebildet, welche die Oberfläche 27 in entgegengesetzter Richtung zur Unterseite 7 rechtwinkelig und parallel zur Längsstirnfläche 6 verlaufend überragen. In einem durch den Abstand 30 geschaffenen Zwischenbereich 32 ist die Werkstückaufnahmevorrichtung 29 lösbar oder unlösbar angeordnet. Es ist jedoch auch möglich, am Werkstückträger 5 mehrere Werkstückaufnahmevorrichtungen 29 anzuordnen.

Diese weist beispielsweise einen konzentrisch um eine Mittelachse 33 verlaufenden Ringsteg 34 auf, an dem ein rechtwinkelig zur Mittelachse 33 verlaufender Verbindungssteg 35 lösbar oder unlösbar angeordnet ist, welcher in den Zwischenbereich 32 zwischen den Stegen 31 ragt und somit über die Verbindungsvorrichtung 28 mit dem Werkstückträger 5 verbunden ist. Der Ringsteg 34 besitzt eine konzentrisch um die Mittelachse 33 umlaufende Innenstirnfläche 36, welche von parallel zueinander und zu den Längsstirnflächen 6 und rechtwinkelig zur Mittelachse 33 einander abgewandt verlaufenden Ringseitenflächen 37 begrenzt wird, die um eine parallel zur Oberfläche 27 und der Mittelachse 33 verlaufende Ringbreite 38 voneinander beabstandet sind. Die Innenstirnfläche 36 wird dabei durch einen konzentrisch um die Mittelachse 33 verlaufenden Innenringdurchmesser 39 begrenzt. Dieser ist geringer als ein Außenringdurchmesser 40, welcher eine konzentrisch um die Mittelachse 33 verlaufende Außenstirnfläche 41 des Ringsteges 34 umgrenzt.

Die Herstellungs- und Montageanlage für die Werkstücke 2 umfaßt zumindest ein Werkzeug, insbesondere ein Formwerkzeug 42, für den oder die Spritzgußteile 3, welches einen Kernteil 43 und einen Nestteil 44 aufweist, wobei der Kernteil 43 einen oder mehrere starre und/oder bewegliche Kerne 45 und der Nestteil 44 ein oder mehrere Formnester 46 aufweist. Der Kernteil 43 besitzt beispielsweise eine Einformung 47, welche durch eine konzentrisch und ringförmig um die Mittelachse 33 verlaufende, dem Nestteil 44 zugewandte Einformungsplanfläche 48 begrenzt wird, die von einer parallel zu dieser verlaufenden Stirnfläche 49 des Kernteils 43, insbesondere einer Platte 50 desselben, um eine parallel zur Mittelachse 33 verlaufende Einformungstiefe 51 in entgegengesetzter Richtung zum Nestteil 44 beabstandet ist. Die Einformung 47, insbesondere die Einformungsplanfläche 48, wird durch eine konzentrisch um die Mittelachse 33 verlaufende Einformungsstirnfläche 52 umgrenzt, welche einen konzentrisch um die Mittelachse 33 umlaufenden Einformungsdurchmesser 53 bildet. Die Einformung 47 kann jedoch auch in der Werkstückaufnahmevorrichtung 29 angeordnet sein.

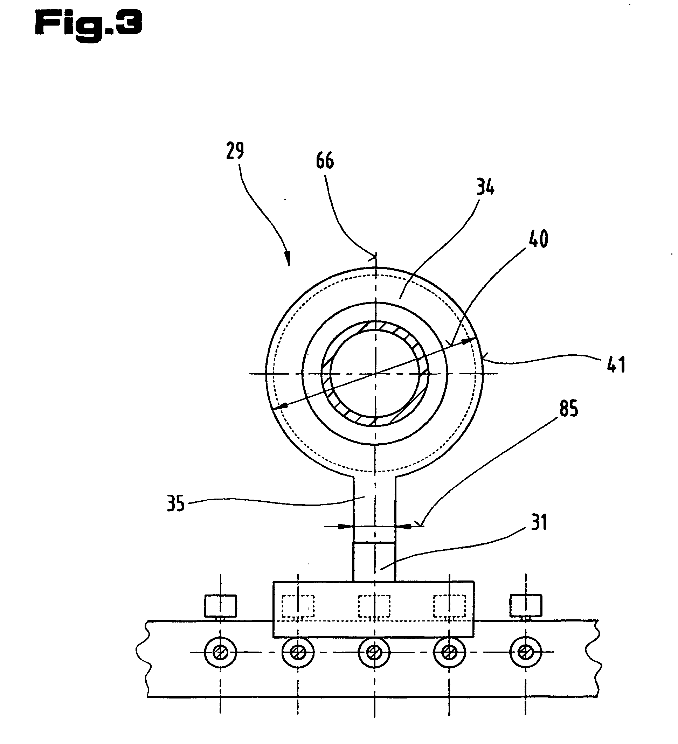

Der Kern 45 ist im vorliegenden Ausführungsbeispiel kegelstumpfförmig ausgebildet und besitzt eine rotationssymmetrisch um die Mittelachse 33 umlaufende Mantelfläche 54. Diese wird durch die Einformungsplanfläche 48 und eine rechtwinkelig zur Mittelachse 33 angeordnete, abgewandt zur Einformungsplanfläche 48 verlaufende Kernstirnfläche 55 begrenzt. Die Kernstirnfläche 55 wird im Schnittbereich mit der Mantelfläche 54 durch einen Kerndurchmesser 56 begrenzt, welcher geringer ist als ein Kerndurchmesser 57 des Kerns 45 im Schnittbereich der Mantelfläche 54 mit der Einformungsplanfläche 48. Der Kern 45 besitzt eine parallel zur Mittelachse 33 verlaufende Kernlänge 58, welche die Kernstirnfläche 55 von der Einformungsplanfläche 48 in Richtung zum Nestteil 44 distanziert. Das Werkstück 2, insbesondere der Spritzgußteil 3, besitzt einander abgewandte, parallel zur Ringseitenfläche 37 der Werkstückaufnahmevorrichtung 29 verlaufende Planflächen 59, welche voneinander um eine rechtwinkelig zu diesen gemessene Werkstückhöhe 60 beabstandet sind. Diese wird gebildet durch die Summe einer Dicke 61 des Spritzgußteils 3 und einer Werkstücktiefe 62, welche eine innere Stirnfläche 63 des Spritzgußteils 3 von einer Planfläche 59 in Richtung zur weiteren Planfläche 59 distanziert. Im Bereich dieser Stirnfläche 63 besitzt der Spritzgußteil 3 einen Innendurchmesser 64, welcher in etwa dem Kerndurchmesser 56 des Kerns 45 entspricht. Im Bereich der Planfläche 59, welche dem Kernteil 43 zugewandt ist, weist der Spritzgußteil 3 einen Durchmesser 65 auf, welcher dem Kerndurchmesser 57 entspricht. Die Einformungstiefe 51 der Einformung 47 im Kern 45 entspricht dabei in etwa der Dicke 61 des Spritzgußteils 3. In einer rechtwinkelig zur Oberfläche 27 und zur Planfläche 59 verlaufenden, in Fig. 3 ersichtlichen Schnittebene 66 weist der Spritzgußteil 3 an einer Außenfläche 67 Mantellinien 68 auf, welche einen durch die Mittelachse 33 in zwei Hälften geteilten spitzen Winkel 69 einschließen.

Der Nestteil 44 mit zumindest einem Formnest 46 besitzt eine dem Spritzgußteil 3 zugewandte Fläche 70 und eine parallel zu dieser verlaufende und dieser abgewandte Außenfläche 71. Von der Fläche 70 in Richtung zur Außenfläche 71 verlaufend weist der Nestteil 44 zumindest eine Ausnehmung 72 auf, welche eine parallel zur Fläche 70 verlaufende Planfläche 73 besitzt, die von der Fläche 70 um eine Ausnehmungstiefe 74 in Richtung zur Außenfläche 71, d.h. in entgegengesetzter Richtung zum Kernteil 43, beabstandet ist. Die Ausnehmung 72 wird weiters durch einen konzentrisch um die Mittelachse 33 verlaufenden Ausnehmungsdurchmesser 75 begrenzt. Dieser entspricht dem Außenringdurchmesser 40 der Werkstückaufnahmevorrichtung 29. In einem der Transporteinrichtung 1 benachbarten Bereich verläuft von der Ausnehmung 72 bis zu einer rechtwinkelig zur Außenfläche 71 verlaufenden Unterseite 76 des Formwerkzeuges 42 bzw. des Nestteils 44 ein Schlitz 77, welcher eine von der Fläche 70 entgegengesetzt zum Kernteil 43 gemessene Schlitztiefe 78 besitzt, die der Ausnehmungstiefe 74 entspricht. Das Formnest 46 besitzt im Bereich der Planfläche 73 einen Nestdurchmesser 79 und in einem von der Planfläche 73 in Richtung zur Außenfläche 71 um eine Formnesttiefe 80 von der Planfläche 73 beabstandeten Bereich einen Nestdurchmesser 81, welcher geringer ist als der Nestdurchmesser 79. Weiters weist der Nestteil 44 eine Angußbuchse 82 mit einer Spritzdüse 83 auf. Der Schlitz 77 besitzt eine rechtwinkelig zur Schlitztiefe 78 gemessene Schlitzbreite 84, welche in etwa einer in Fig. 3 dargestellten Stegbreite 85 des Verbindungssteges 35 der Werkstückaufnahmevorrichtung 29 entspricht.

Soll nun ein Spritzgußteil 3 gefertigt werden, so wird ein Werkstückträger 5 und/oder eine Werkstückaufnahmevorrichtung 29 in den Bereich des Formwerkzeuges 42 eingebracht. In weiterer Folge werden im vorliegenden Ausführungsbeispiel der Kernteil 43 und der Nestteil 44 aufeinander zubewegt, wobei der Werkstückträger 5 und/oder die Werkstückaufnahmevorrichtung 29 in die Ausnehmung 72 des Nestteils 44 derart eingeführt wird, daß der Ringsteg 34 in die Ausnehmung 72 und der Verbindungssteg 35 in den Schlitz 77 eingebracht wird. Dadurch bildet die Werkstückaufnahmevorrichtung 29 einen Teil des Formnestes 46, insbesondere Oberflächenteile desselben, aus, wobei die Ringseitenfläche 37 des Ringsteges 34 an der Planfläche 73 der Ausnehmung 72 des Nestteils 44 anliegt. Der Kernteil 43, insbesondere dessen Stirnfläche 49, wird in anliegende Lage mit der anderen Ringseitenfläche 37 gebracht. Dabei bildet die Einformung 47 des Kernteils 43 ein Formnest 46 für einen Teilbereich des Spritzgußteils 3, insbesondere für einen Bund 86 des Spritzgußteils 3. Nach erfolgtem Spritzgußvorgang und Entformung wird der Spritzgußteil 3 durch die Werkstückaufnahmevorrichtung 29 in der gespritzten Position gehalten und kann nun der Werkstückträger 5 in Förderrichtung - Pfeil 87 - lageorientiert bzw. positioniert weitertransportiert werden.

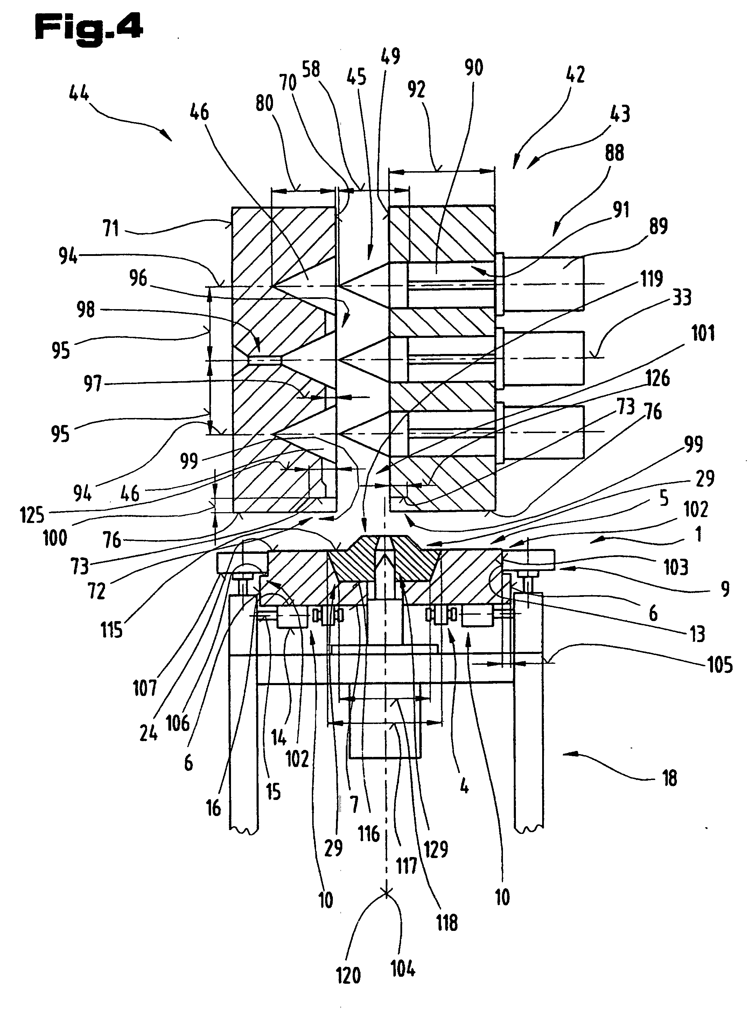

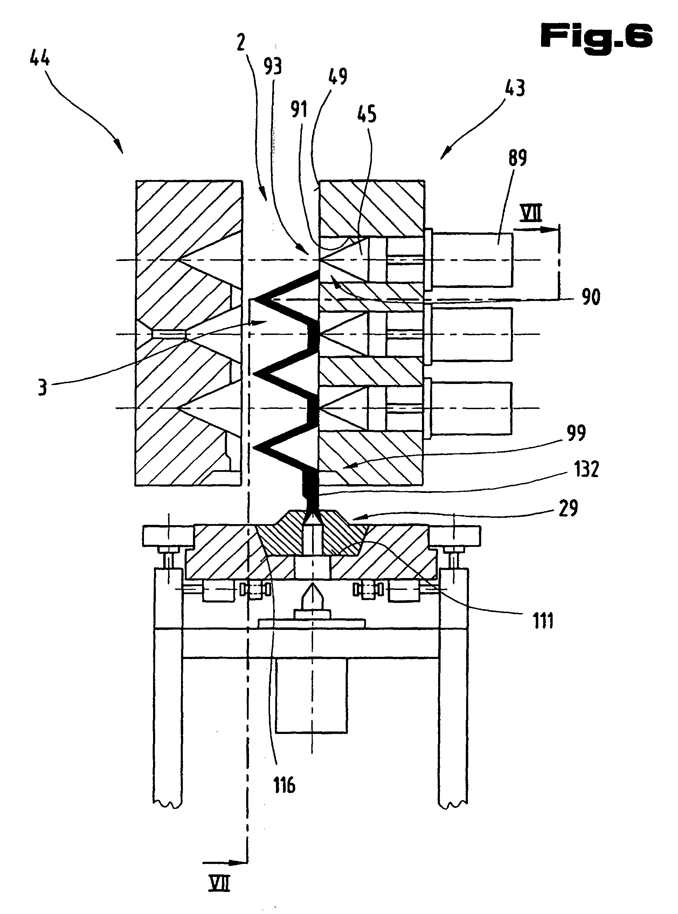

In den gemeinsam beschriebenen Fig. 4 bis 7 ist eine weitere Ausführungsvariante der erfindungsgemäßen Transporteinrichtung 1 bzw. des erfindungsgemäßen Formwerkzeuges 42 bzw. der erfindungsgemäßen Werkstückaufnahmevorrichtung 29 gezeigt. Das Formwerkzeug 42 besteht wiederum aus einem Kernteil 43 und einem Nestteil 44. Der Kernteil 43 weist beispielsweise drei Kerne 45 auf, welche über Antriebsvorrichtungen 88, insbesondere Hydraulikzylinder 89, relativbeweglich in beispielsweise durch zylindrische Hohlräume 90 gebildeten Führungsvorrichtungen 91 gelagert sind. Die Kerne 45 sind beispielsweise kegelförmig ausgebildet und besitzen eine Kernlänge 58, welche geringer ist als eine parallel zu dieser und rechtwinkelig zur Stirnfläche 49 des Kernteils 43 gemessene Führungslänge 92. Dadurch ist es möglich, die Kerne 45 in entgegengesetzter Richtung zum Nestteil 44 so weit in die Führungsvorrichtung 91 einzuführen, daß - wie in Fig. 6 ersichtlich - dem Nestteil 44 zugewandte Endbereiche 93 der Kerne 45 nicht in Richtung zum Nestteil 44 über die Stirnfläche 49 des Kernteils 43 vorragen.

Der Nestteil 44 besitzt der Anzahl der Kerne 45 entsprechend beispielsweise drei Formnester 46, welche von der den Nestteil 44 in Richtung zum Kernteil 43 begrenzenden Fläche 70 in Richtung der dieser abgewandten Außenfläche 71 bis in eine Formnesttiefe 80 hineinragen. In einem Kern 45 und einem diesen zugeordneten Formnest 46 verläuft die Mittelachse 33, welche rechtwinkelig zur Stirnfläche 49 bzw. Fläche 70 angeordnet ist. Die beiden anderen Formnester 46 bzw. Kerne 45 sind symmetrisch um die Mittelachse 33 angeordnet, wobei jeweils ein Formnest 46 und ein diesem zugeordneter Kern 45 eine parallel zur Mittelachse 33 verlaufende Mittelachse 94 aufweisen. Diese sind von der Mittelachse 33 um einen Achsabstand 95, welcher rechtwinkelig zur Mittelachse 33 gemessen wird, beabstandet.

In der Fläche 70 befinden sich die Formnester 46 miteinander verbindende Verteilungskanäle 96, welche von der Fläche 70 in Richtung zur Außenfläche 71 bis in eine Kanaltiefe 97, die rechtwinkelig zur Fläche 70 gemessen wird, vorragen. Der Nestteil 44 besitzt einen konzentrisch um die Mittelachse 33 von der Außenfläche 71 bis zum Formnest 46 verlaufenden Angußkanal 98. Das Formwerkzeug 42 besitzt eine Ausnehmung 72, welche durch jeweils einen im Kernteil 43 und einen im Nestteil 44 angeordneten Ausnehmungsbereich 99 gebildet wird. Die Ausnehmungsbereiche 99 sind an den Unterseiten 76 des Kernteils 43 und des Nestteils 44 angeordnet. Sie weisen eine parallel zur Außenfläche 71 und rechtwinkelig zur Unterseite 76 gemessene Tiefe 100 auf, welche die Planflächen 73 der Ausnehmungsbereiche 99 von den Unterseiten 76 in entgegengesetzter Richtung zum Werkstückträger 5 distanzieren. In der Fläche 70 des Nestteils 44 ist weiters ein Verbindungskanal 101 angeordnet, welcher von der Planfläche 73 des beispielsweise im Nestteil 44 angeordneten Ausnehmungsbereiches 99 bis zu dem diesem benachbart angeordneten Formnest 46 ragt. Der Werkstückträger 5 weist eine dem Formwerkzeug 42 zugewandte Oberseite 24 und eine dieser abgewandte und parallel dazu verlaufende Unterseite 7 auf. Rechtwinkelig zur Unterseite 7 bzw. Oberseite 24 und parallel zur Außenfläche 71 des Formwerkzeuges 42 verlaufen den Werkstückträger 5 seitlich begrenzende Längsstirnflächen 6. In diesen Längsstirnflächen 6 ist jeweils eine Ausnehmung 102 angeordnet, welche eine parallel zur Längsstirnfläche 6 verlaufende Ausnehmungsfläche 103 besitzt, die von der Längsstirnfläche 6 in Richtung einer rechtwinkelig zur Mittelachse 33 verlaufenden Symmetrieebene 104 des Werkstückträgers 5 um eine Ausnehmungstiefe 105 beabstandet ist. An den Ausnehmungsflächen 103 angeordnet befinden sich die Vertikalrollen 9, welche Seitenführungsbahnen 13 für den Werkstückträger 5, insbesondere für die Ausnehmungsflächen 103, ausbilden.

Durch die Ausnehmungstiefe 105 wird eine Querfläche 106 der Ausnehmung 102 geschaffen, welche rechtwinkelig zur Ausnehmungsfläche 103 von dieser bis zur Längsstirnfläche 6 verläuft. Diese Querfläche 106 überdeckt bereichsweise eine parallel zu dieser verlaufende, die Vertikalrollen 9 in entgegengesetzter Richtung zum Formwerkzeug 42 begrenzende Rollenflächen 107. An der Unterseite 7 des Werkstückträgers 5 angeordnet befinden sich die Horizontalrollen 10 mit Horizontalachse 15, deren Laufflächen 14 eine Höhenführungsbahn 16 für den Werkstückträger 5 bilden. Sowohl die Vertikalrollen 9 als auch die Horizontalrollen 10 sind im Gestell 18 vorzugsweise drehbeweglich gelagert. An der Unterseite 7 des Werkstückträgers 5 angeordnet befindet sich weiters die Antriebseinrichtung 4.

Der Werkstückträger 5 besitzt eine von der Oberseite 24 in Richtung zur Unterseite 7 ragende Vertiefung 108. Diese besitzt beispielsweise einen kreisförmigen Querschnitt in einer im rechten Winkel zur Symmetrieebene 104 verlaufenden Ebene, wobei ein die Vertiefung 108 im Bereich der Oberseite 24 begrenzender Vertiefungsdurchmesser 109 größer ist als ein Vertiefungsdurchmesser 110, welcher eine parallel zur Oberseite 24 verlaufende Innenfläche 111 der Vertiefung 108 begrenzt, die von der Oberseite 24 in Richtung zur Unterseite 7 um eine rechtwinkelig zur Oberseite 24 gemessene Tiefe 112 beabstandet ist. Von der Innenfläche 111 bis zur Unterseite 7 erstreckt sich eine Bohrung 113 mit einem parallel zur Innenfläche 111 gemessenen Bohrungsdurchmesser 114.

In der Vertiefung 108 lösbar und relativbeweglich angeordnet befindet sich die Werkstückaufnahmevorrichtung 29. Diese ist kegelstumpfförmig ausgebildet und weist parallel zueinander verlaufende, einander abgewandte Planflächen 115, 116 auf. Diese sind kreisförmig ausgebildet und werden von Durchmessern 117, 118, welche parallel zur Unterseite 76 des Formwerkzeuges 42 gemessen werden, umgrenzt. Der Durchmesser 117 ist dabei größer als der Durchmesser 118. Der Durchmesser 118 wiederum ist größer als der Bohrungsdurchmesser 114 der im Werkstückträger 5 angeordneten Bohrung 113. Der Durchmesser 117 entspricht dabei in etwa dem Vertiefungsdurchmesser 109 und der Durchmesser 118 in etwa dem Vertiefungsdurchmesser 110. Die Planfläche 115 wird in entgegengesetzter Richtung zur Planfläche 116, d.h. in Richtung zum Formwerkzeug 42, von einem kegelstumpfförmigen Ansatz 119 überragt. Die Durchmesser 117, 118 verlaufen konzentrisch um eine in der Symmetrieebene 104 liegende, rechtwinkelig zur Mittelachse 33 verlaufende Mittelachse 120. Der Ansatz 119, welcher symmetrisch zur Mittelachse 120 angeordnet ist, verläuft von einem in der Planfläche 115 liegenden Ansatzdurchmesser 121 konisch in Richtung zum Formwerkzeug 42 verjüngend bis zu einem Ansatzdurchmesser 122, wobei eine durch den Ansatzdurchmesser 122 begrenzte Ansatzfläche 123 der Planfläche 73 der durch die beiden Ausnehmungsbereiche 99 gebildeten Ausnehmung 72 zugewandt ist.

Die Ausnehmung 72 weist im Bereich der Planfläche 73 einen Durchmesser 124 auf, welcher dem Ansatzdurchmesser 122 entspricht und der gebildet wird aus der Summe eines Durchmesserteils 125, welcher den im Nestteil 44 angeordneten Ausnehmungsbereich 99, insbesondere dessen Planfläche 73, begrenzt und von der Fläche 70 in Richtung zur Außenfläche 71 gemessen wird, und eines Durchmesserteils 126, welcher die Planfläche 73 des Ausnehmungsbereiches 99 des Kernteils 43 von der Stirnfläche 49 in entgegengesetzter Richtung zum Nestteil 44 begrenzt.

Soll nun ein Spritzvorgang durchgeführt werden, so wird der Nestteil 44 in Richtung zum beispielsweise ortsfest angeordneten Kernteil 43 bewegt, sodaß die Fläche 70 und die Stirnfläche 49 sich berühren. Dabei wird die Ausnehmung 72 durch die Ausnehmungsbereiche 99 gebildet. Anschließend wird die Werkstückaufnahmevorrichtung 29, welche im Werkstückträger 5, insbesondere in der Vertiefung 108, angeordnet ist, aus der Vertiefung 108 herausgehoben und in Richtung zum Formwerkzeug 42 mittels einer Antriebsvorrichtung 127, insbesondere eines Hydraulikzylinders 128, bewegt, sodaß der Ansatz 119 in die Ausnehmung 72 eingeführt wird und die Ansatzfläche 123 an der Planfläche 73 der Ausnehmung 72 anliegt. Die Werkstückaufnahmevorrichtung 29 besitzt eine Bohrung 129, welche von der Planfläche 116 zur Ansatzfläche 123 reicht. Im Bereich des Ansatzes 119 verläuft die Bohrung 129 konisch verjüngend in Richtung zum Formwerkzeug 42. Die Bohrung 129 dient dabei der Aufnahme eines über die Antriebsvorrichtung 127 relativ bewegten Dorns 130, welcher eine kegelförmige Spitze 131 aufweist, die nicht über die Ansatzfläche 123 in Richtung zum Formwerkzeug 42 vorragt. Der plastifizierte Kunststoff wird nun in das geschlossene Formwerkzeug 42 eingespritzt, wobei der Kunststoff über die Verteilungskanäle 96 die äußeren Formnester 46 erreicht und über den Verbindungskanal 101 zur Ausnehmung 72 bzw. zur Werkstückaufnahmevorrichtung 29 weitergeleitet wird. Er dringt dabei in die Bohrung 129 ein und erstarrt nach erfolgtem Kühlvorgang. Zum Entformen wird nun der Nestteil 44 in entgegengesetzter Richtung zum Kernteil 43 bewegt und die Kerne 45 werden mittels der Hydraulikzylinder 89 längs der Führungsvorrichtung 91 in den Hohlraum 90 eingefahren.

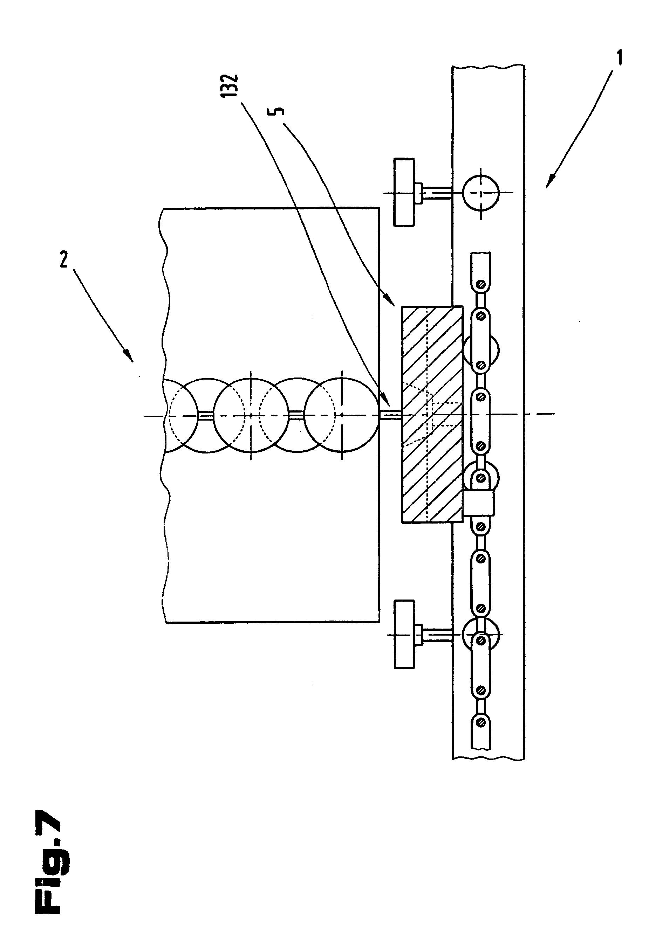

Ist dies erfolgt, so wird als nächster Schritt die Werkstückaufnahmevorrichtung 29 aus dem Ausnehmungsbereich 99, welcher im Kernteil 43 angeordnet ist, ausgefahren, wobei nun das Werkstück 2, welches beispielsweise drei als Becher ausgebildete Spritzgußteile 3 umfaßt, über einen aus Kunststoff geformten Haltesteg 132 mit der Werkstückaufnahmevorrichtung 29 verbunden ist. Der Haltesteg 132 ragt dabei in die Bohrung 129 vor und bildet einen Werkstückteilbereich aus. Die Werkstückaufnahmevorrichtung 29 wird in die Vertiefung 108 abgesenkt, sodaß die Planfläche 116 der Werkstückaufnahmevorrichtung 29 an der Innenfläche 111 der Vertiefung 108 anliegt. Dadurch ist, wie in Fig. 7 ersichtlich, das Werkstück 2 über den Haltesteg 132 bewegungsfest mit einem Werkstückträger 5 verbunden und kann lageorientiert in weiteren Stationen der Transporteinrichtung 1 einer Nachbearbeitung unterzogen werden.

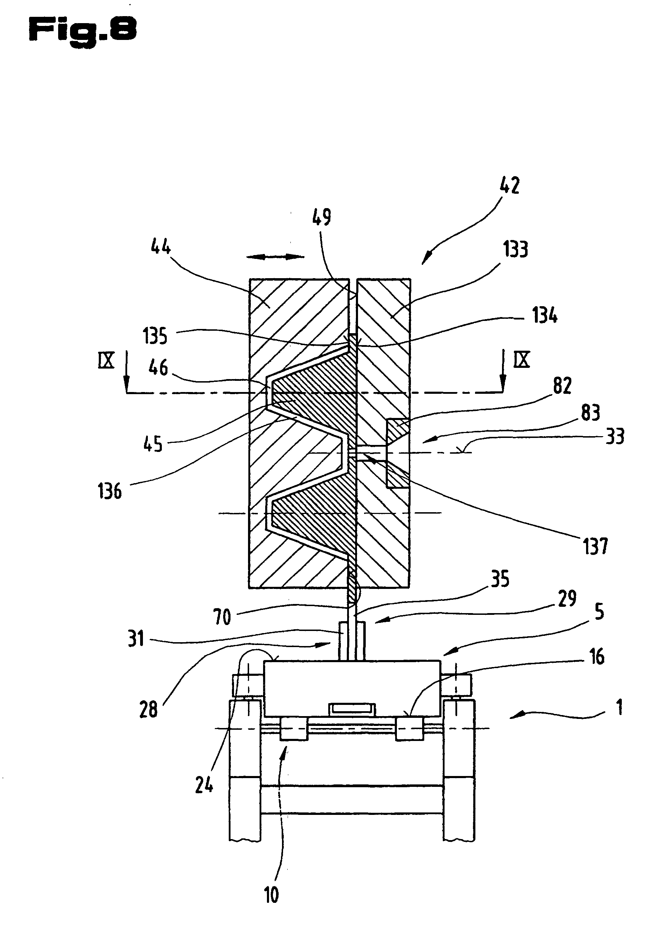

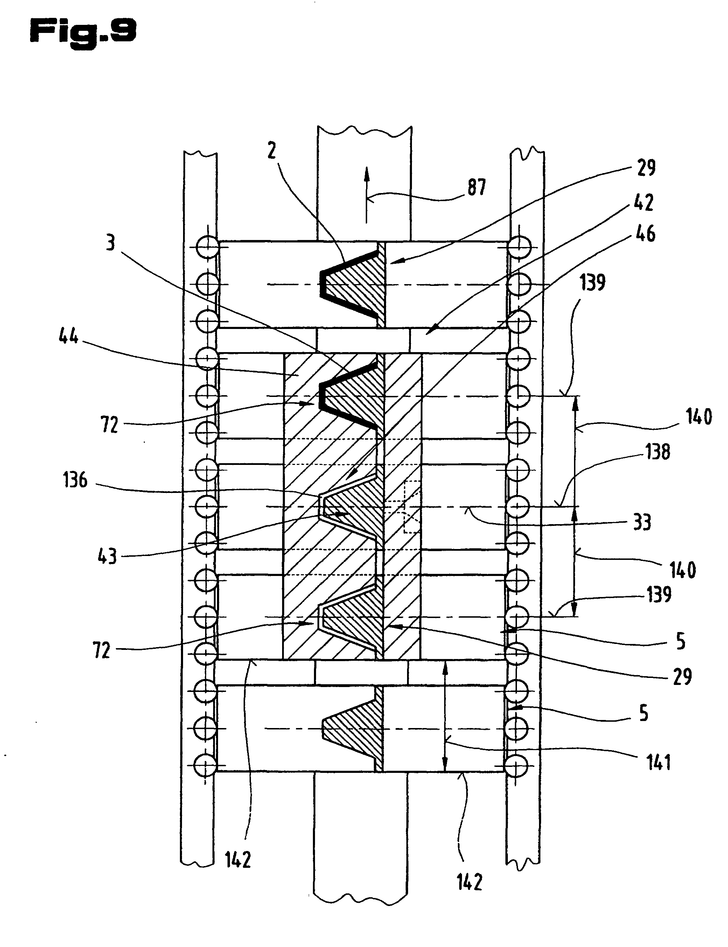

In den gemeinsam beschriebenen Fig. 8 und 9 ist eine andere Ausführungsvariante der erfindungsgemäßen Transporteinrichtung 1 bzw. des erfindungsgemäßen Formwerkzeuges 42 bzw. der erfindungsgemäßen Werkstückaufnahmevorrichtung 29 gezeigt. Das Formwerkzeug 42 besteht aus dem Nestteil 44 und einem Anschlagteil 133, welcher die Spritzdüse 83 mit der Angußbuchse 82 aufweist. Die Verbindungsvorrichtung 28 besteht aus zwei Stegen 31, welche lösbar oder unlösbar auf dem Werkstückträger 5, insbesondere auf dessen Oberseite 24, angeordnet sind und diese entgegengesetzt zur Höhenführungsbahn 16, welche durch die Horizontalrollen 10 gebildet ist, überragen. Die Stege 31 dienen dabei der Aufnahme der Werkstückaufnahmevorrichtung 29, insbesondere des Verbindungssteges 35, welcher durch rechtwinkelig zur Oberseite 24 verlaufende Seitenflächen 134, 135 begrenzt wird.

Die Werkstückaufnahmevorrichtung 29 wird durch einen Kernteil 43 gebildet. Dabei wird die Seitenfläche 135 von vorzugsweise einstückig mit dem Verbindungssteg 35 verbundenen Kernen 45 entgegengesetzt zur Seitenfläche 134 überragt, welche über den Verbindungssteg 35 miteinander und mit dem Werkstückträger 5 verbunden sind. Im vorliegenden Ausführungsbeispiel sind am Verbindungssteg 35 beispielsweise zwei Kerne angeordnet, welche im geschlossenen Zustand der Formwerkzeuge 42 in die im Nestteil 44 angeordneten Formnester 46 ragen. Die Abmessungen des Formnestes 46 sind selbstverständlich größer als die der Kerne 45, sodaß ein Formhohlraum 136 für die Werkstücke 2 gebildet wird. Vorzugsweise zwischen den beiden Kernen 45 weist der Verbindungssteg 35 eine Durchtrittsöffnung 137 auf, in deren Zentrum die Mittelachse 33 der Spritzdüse 83 verläuft, sodaß diese fluchtend zur Spritzdüse 83 des Formwerkzeuges 42 angeordnet ist. Der Anschlagteil 133 wird in Richtung zum Verbindungssteg 35 durch die Stirnfläche 49 begrenzt, welche während des Spritzvorganges ebenflächig mit der Seitenfläche 134 des Verbindungssteges 35 verläuft. Weiters weist der Nestteil 44 die dem Anschlagteil 133 zugewandte Fläche 70 auf, welche ebenflächig mit der Seitenfläche 135 der Werkstückaufnahmevorrichtung 29 verläuft. Der Nestteil 44 bildet, wie nun genauer in Fig. 9 zu ersehen, den Formhohlraum 136 aus, welcher symmetrisch um eine durch die Mittelachse 33 rechtwinkelig zur Oberseite 24 verlaufende Symmetrieebene 138 angeordnet ist. Der Nestteil 44 besitzt weiters Ausnehmungen 72, welche parallel zur Symmetrieebene 138 verlaufende Symmetrieebenen 139 besitzen. Die in Förderrichtung - Pfeil 87 - und gegen die Förderrichtung - Pfeil 87 - angeordneten Ausnehmungen 72 bzw. deren Symmetrieebenen 139 sind von der Symmetrieebene 138 um gleiche, rechtwinkelig zur Symmetrieebene 138 gemessene Abstände 140 distanziert. Die Abstände 140 entsprechen dabei Teilungsabständen 141 zweier benachbarter Werkstückträger 5 bzw. zweier parallel zueinander und einander abgewandt verlaufender Frontflächen 142.

Dadurch ist es nun möglich, die Werkstückaufnahmevorrichtung 29, welche im vorliegenden Ausführungsbeispiel den Kernteil 43 ausbildet, während des Spritzvorganges, bei welchem ein auf dem in Förderrichtung - Pfeil 87 - benachbarten Werkstückträger 5 angeordneter Kernteil 43 im Formnest 46 angeordnet ist und den Formhohlraum 136 ausbildet, in eine Warteposition zu bringen, welche vom Formhohlraum 136 nur gering, d.h. um den Abstand 140 entfernt ist, sodaß nach erfolgtem Spritzvorgang, d.h. beim Öffnen des Formwerkzeuges 42, insbesondere bei Horizontalbewegung des Nestteils 44 in entgegengesetzter Richtung zum Anschlagteil 133, die dem Formhohlraum 136 entgegengesetzt zur Förderrichtung - Pfeil 87 - benachbarte Werkstückaufnahmevorrichtung 29 rasch in die Spritzposition, d.h. in das Formnest 46 für einen neuerlichen Spritzvorgang verbracht werden kann, wodurch der ursprünglich in der Ausnehmung 72 angeordnete Kernteil 43 nunmehr ins Formnest 46 eingebracht wird und mit diesem den Formhohlraum 136 ausbildet, während der während des Spritzvorganges im Formnest 46 angeordnete Kern 45 bzw. Kernteil 43 mit dem auf diesem angeordneten Spritzgußteil 3 nunmehr in die dem Formnest 46 in Förderrichtung - Pfeil 87 - benachbarte Ausnehmung 72 eingebracht wird. Insbesondere bei starr verketteten Transporteinrichtungen 1, d.h. bei konstanter relativer Lage der Werkstückträger 5 zueinander, erfolgt nach dem Spritzvorgang ein Weitertakten des Werkstückträgers 5 mit der Werkstückaufnahmevorrichtung 29 und dem auf dem Kern 45 bzw. dem Kernteil 43 angeordneten Werkstück 2 in die in Förderrichtung - Pfeil 87 - vom Formnest 46 beabstandete Ausnehmung 72. Durch diese Ausbildung ist es nun möglich, die Abstände 140 und die Teilungsabstände 141 der Werkstückträger 5 bzw. der Formnester 46 zu reduzieren und dadurch die Taktzeiten der Transporteinrichtung 1 zu minimieren.

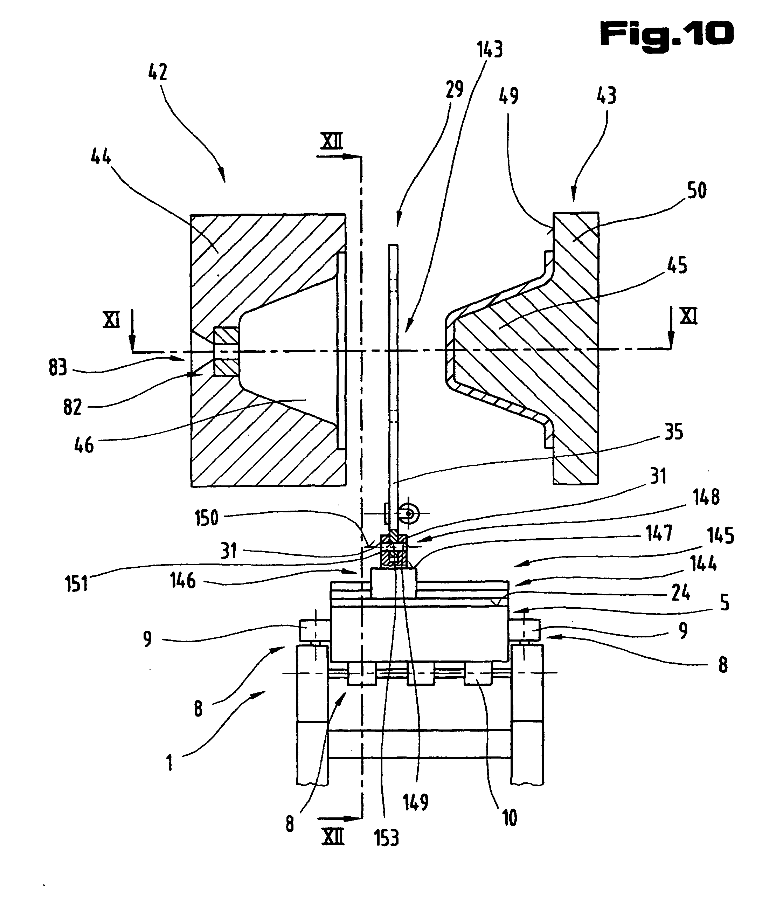

Die gemeinsam beschriebenen Fig. 10 bis 12 zeigen eine andere Ausführungsvariante der erfindungsgemäßen Transporteinrichtung 1 bzw. des erfindungsgemäßen Formwerkzeuges 42 bzw. der erfindungsgemäßen Werkstückaufnahmevorrichtung 29. Das Formwerkzeug 42 besteht aus einem Nestteil 44 mit dem Formnest 46, der Spritzdüse 83 und der Angußbuchse 82 und aus dem Kernteil 43 mit der Platte 50 und dem die Stirnfläche 49 der Platte 50 in Richtung zum Nestteil 44 überragenden Kern 45.

Die Werkstückaufnahmevorrichtung 29 ist im vorliegenden Ausführungsbeispiel als Handhabungsvorrichtung 143 ausgebildet, welche auf einer Linearbewegungseinheit 144 lösbar oder unlösbar angeordnet ist, die auf der Oberseite 24 des Werkstückträgers 5 angeordnet ist. Dieser wird durch Führungsvorrichtungen 8, insbesondere durch die Vertikalrollen 9 und die Horizontalrollen 10, der Seite und der Höhe nach geführt. Die Linearbewegungseinheit 144 ist vorzugsweise durch einen Linearzylinder 145 gebildet, welcher einen Schlitten 146 mit einer dem Formwerkzeug 42 zugewandten Oberseite 147 aufweist. Auf dieser Oberseite 147 ist eine durch die Stege 31 gebildete Haltevorrichtung 148 für die Handhabungsvorrichtung 143 angeordnet. Die Stege 31 weisen dabei Lageröffnungen 149 auf, welche konzentrisch um Schwenkachsen 150 verlaufen und fluchtend zueinander angeordnet sind. Die Lageröffnungen 149 dienen dabei der Aufnahme von Lagerzapfen 151, in deren Zentren die Schwenkachsen 150 parallel zur Oberseite 147 des Schlittens 146 verlaufen. Die Schwenkachsen 150 sind um eine parallel zur Oberseite 147 gemessene Distanz 152 beabstandet und durchragen jeweils eine Lagerbohrung 153, welche in einem Verbindungssteg 35 der Handhabungsvorrichtung 143 angeordnet ist. Der Verbindungssteg 35 weist einen oder mehrere Klemmbügel 154 auf, welche beispielsweise zwei in Richtung des Werkstückes 2 vorragende Klemmfortsätze 155 aufweisen.

Die Klemmfortsätze 155 liegen im geklemmten Zustand der Klemmbügel 154 an der Außenfläche 67 des Werkstückes 2, insbesondere im Bereich eines an der Außenfläche 67 anliegenden, konzentrisch um die Mittelachse 33 verlaufenden Klemmdurchmessers 156 an. Die Klemmfortsätze 155 überragen dabei eine Krümmungsstirnfläche 157, welche in einem Krümmungsradius 158 um die Mittelachse 33 verläuft und die den Klemmbügel 154 in Richtung zur Mittelachse 33 begrenzt. Die Klemmbügel 145 sind symmetrisch um die Symmetrieebene 138 angeordnet. Über einen Schwenkantrieb 159, welcher beispielsweise durch einen doppelt wirkenden Zylinder 160 gebildet ist, ist es möglich, die Verbindungsstege 35 mit den Klemmbügeln 154 in einander entgegengesetzter Richtung um die Schwenkachsen 150 in eine Öffnungsposition zu verschwenken, bei der die Klemmfortsätze 155 von der Mittelachse 33 um einen Abstand 161 distanziert sind, welcher größer ist als der halbe Klemmdurchmesser 156, sodaß die Klemmfortsätze 155 nicht mehr an der Außenfläche 67 des Werkstückes 2 anliegen. Zu diesem Zwecke ist der Schwenkantrieb 159, insbesondere des Zylinder 160, mit Zylinderstangen 162 in Schwenklagerungen 163 angeordnet, welche eine Relativbewegung des Schwenkantriebes 159 zum Verbindungssteg 35 ermöglichen.

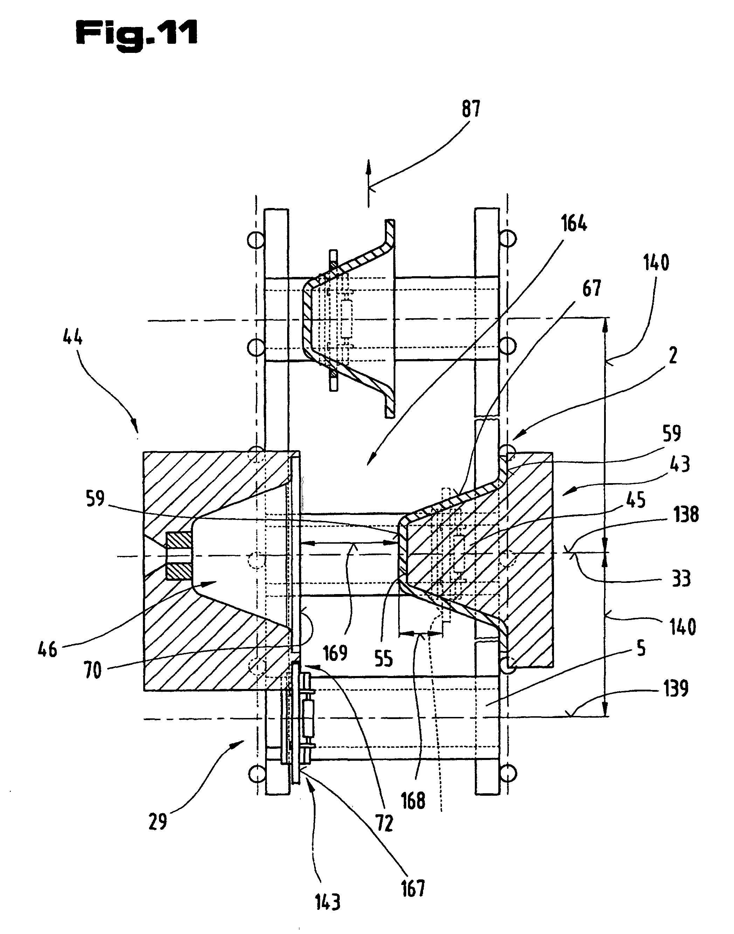

In Fig. 11 ist weiters ersichtlich, daß die entgegengesetzt zur Förderrichtung - Pfeil 87 - dem Formnest 46 benachbarte Werkstückaufnahmevorrichtung 29 zumindest bereichsweise in der Ausnehmung 72 angeordnet ist. Diese ist, wie bereits beschrieben, im Nestteil 44 unmittelbar benachbart zum Formnest 46 angeordnet. Es ist jedoch auch möglich, die Ausnehmung 72 im Kernteil 43 anzuordnen.

Nach erfolgtem Spritzvorgang wird das Werkstück 2 dadurch entformt, daß der Kernteil 43 und der Nestteil 44 in entgegengesetzter Richtung relativ zueinander bewegt werden. Das Werkstück 2 verbleibt im vorliegenden Ausführungsbeispiel am Kern 45. Während der Entformungsbewegung oder nach der selben wird die Werkstückaufnahmevorrichtung 29, insbesondere die Handhabungsvorrichtung 143, durch die Linearbewegungseinheit 144 aus der Ausnehmung 72 in Richtung zum Kernteil 43 bewegt. Ist nun die Handhabungsvorrichtung 143 bzw. sind nun die Verbindungsstege 35 mit den Klemmbügeln 154 vollständig aus der Ausnehmung 72 herausbewegt worden, so wird der Werkstückträger 5 in Förderrichtung - Pfeil 87 - um den Abstand 140 bewegt, sodaß die Symmetrieebene 139 des Werkstückträgers 5 bzw. der Handhabungsvorrichtung 143 deckungsgleich mit der durch die Mittelachse 33 verlaufenden Symmetrieebene 138 ist. Dabei befindet sich die Handhabungsvorrichtung 143 in einem Zwischenbereich 164, welcher durch die Fläche 70 des Nestteils 44 und die Planfläche 59 des Werkstückes 2 begrenzt wird. Anschließend wird die Handhabungsvorrichtung 143 mittels der Linearbewegungseinheit 144 zum Werkstück 2 bewegt. Danach werden über eine Schwenkvorrichtung 165 die Klemmbügel 154 um die Schwenkachsen 150 in entgegengesetzter Richtung zum Werkstück 2 verschwenkt, sodaß die Klemmfortsätze 155 aus einer mit der Außenfläche 67 anliegenden Lage, in welcher diese um den halben Klemmdurchmesser 156 von der Mittelachse 33 distanziert sind, in die Öffnungslage verschwenkt werden, bei welcher die Klemmfortsätze 155 von der Mittelachse 33 um den Abstand 161 distanziert sind. Die Schwenkvorrichtung 165 wird durch den Schwenkantrieb 159 und Lagervorrichtungen 166 gebildet, die in den Verbindungsstegen 35 angeordnet sind und aus Schwenklagerungen 163 für die Zylinderstangen 162 bestehen. Nach dieser Öffnung der Werkstückaufnahmevorrichtung 29 wird diese über die Linearbewegungseinheit 144 weiter in Richtung zum Werkstück 2 bewegt, bis eine Seitenfläche 167 des Klemmbügels 154 von der Planfläche 59 um einen Abstand 168 in Richtung zum Kernteil 43 beabstandet ist. Die Planfläche 59 ist dabei von der Fläche 70 um eine Distanz 169 beabstandet.

Bei dieser Lage der Klemmbügel 154 werden diese nun aus der Öffnungsposition mittels der Schwenkvorrichtung 165 in die Halteposition um die Schwenkachsen 150 verschwenkt, sodaß die Klemmfortsätze 155 an der Außenfläche 67 am Klemmdurchmesser 156 anliegen. Danach wird die Werkstückaufnahmevorrichtung 29 entgegengesetzt zum Kernteil 43 in Richtung zum Nestteil 44 bewegt, bis die dem Kernteil 43 zugewandte Planfläche 59 von der Kernstirnfläche 55 in Richtung zum Nestteil 44 beabstandet ist. In dieser Lage wird nun der Werkstückträger 5 um den Abstand 140 in Förderrichtung - Pfeil 87 - weiterbewegt. Selbstverständlich ist es möglich, andere Ausführungsvarianten einer derartigen Handhabungsvorrichtung 143, der Linearbewegungseinheit 144, der Schwenkvorrichtung 165 oder der Lagervorrichtung 166 auszubilden.

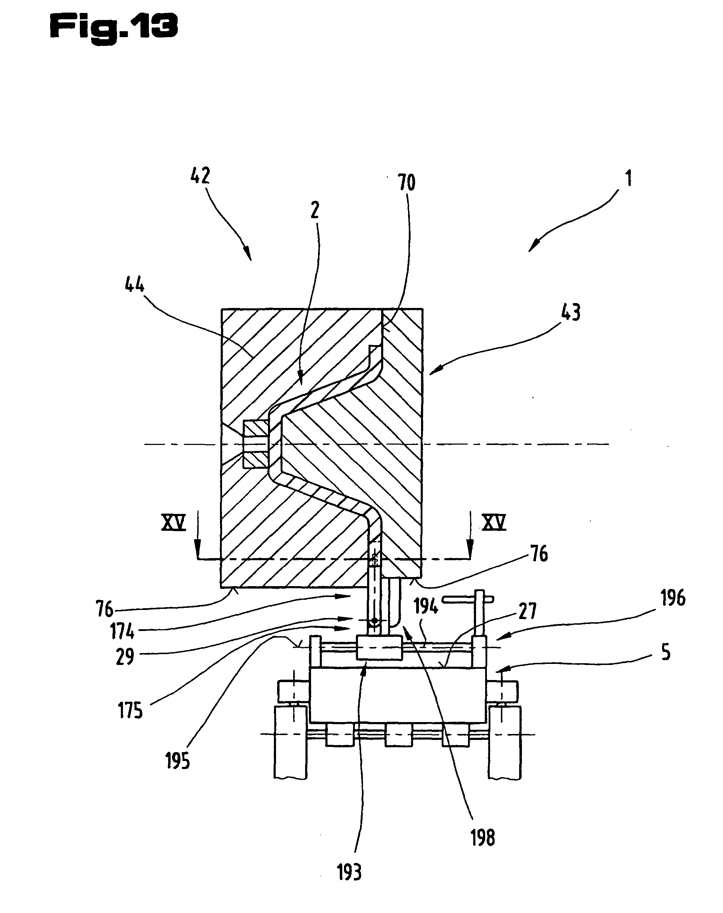

In den Fig. 13 bis 16 ist eine weitere Ausführungsvariante der erfindungsgemäßen Transporteinrichtung 1 bzw. des erfindungsgemäßen Formwerkzeuges 42 bzw. der erfindungsgemäßen Werkstückaufnahmevorrichtung 29 gezeigt. Das Formwerkzeug 42, insbesondere der Nestteil 44, weist das Formnest 46 und den als Ausnehmung 72 ausgebildeten Schlitz 77 auf, welcher sich von der Unterseite 76 bis zu einer Ringstirnfläche 170 erstreckt, die rechtwinkelig zur Fläche 70 und konzentrisch zur Mittelachse 33 verläuft. Der Schlitz 77 besitzt eine rechtwinkelig zur Symmetrieebene 138 gemessene Schlitzbreite 171 und eine rechtwinkelig zur Unterseite 76 gemessene Schlitzhöhe 172, welche bis zu einer Schnittkante der Ringstirnfläche 170 mit einer Schlitzseitenfläche 173 gemessen wird.

Im Schlitz 77 befindet sich ein Teil der Werkstückaufnahmevorrichtung 29, welche durch einen Aufnahmezapfen 174 gebildet ist und eine Schwenklagervorrichtung 175 aufweist, über welche der Aufnahmezapfen 174 um eine parallel zur Oberfläche 27 des Werkstückträgers 5 und rechtwinkelig zur Symmetrieebene 138 verlaufende Schwenkachse 176 verschwenkbar ist. Der Aufnahmezapfen 174 besteht dabei aus beispielsweise einem einen rechteckigen Querschnitt aufweisenden Basisteil 177, der eine rechtwinkelig zur Symmetrieebene 138 verlaufende, der Oberfläche 27 abgewandte Stirnfläche 178 besitzt, die entgegengesetzt zur Schwenkachse 176 von einem Fortsatz 179 überragt wird, welcher beispielsweise ebenfalls einen rechteckigen Querschnitt mit einer parallel zur Symmetrieebene 138 gemessenen Seitenlänge 180 und einer rechtwinkelig zur Symmetrieebene 138 gemessenen Seitenlänge 181 aufweist. Die Seitenlänge 181 ist dabei geringer als die Schlitzbreite 171 und die Seitenlänge 180 geringer als eine von der Fläche 70 in entgegengesetzter Richtung zum Kernteil 73 gemessene Schlitztiefe 78. Der Fortsatz 179 besitzt eine rechtwinkelig zur Stirnfläche 178, entgegengesetzt zur Schwenkachse 176 gemessene Fortsatzhöhe 182, welche mit den Seitenlängen 180, 181 Seitenflächen 183 des Fortsatzes 179 bildet. Die Schlitztiefe 78 distanziert die Planfläche 73 des Formnestes 46 von der Fläche 70 in entgegengesetzter Richtung zum Kernteil 43, welcher die Stirnfläche 49 besitzt, die dem Nestteil 44 zugewandt ist.

Durch die Seitenfläche 183, die Stirnfläche 178, die Schlitzseitenflächen 173 und die Planfläche 73 sowie die Stirnfläche 49 wird ein Zwischenraum 184 gebildet, welcher beim Spritzvorgang mit Kunststoff ausgefüllt wird. Der Kunststoff umhüllt dabei den Fortsatz 179 derart, daß das Werkstück 2 im erstarrten Zustand bewegungsfest, jedoch vorzugsweise lösbar mit der Werkstückaufnahmevorrichtung 29, insbesondere dem Basisteil 177, verbunden ist. Der Basisteil 177 ist, wie bereits angemerkt, über eine Schwenklagervorrichtung 175 verschwenkbar.

Diese weist einen Schwenklagerzapfen 185 auf, welcher in einer Lagerbohrung 186 und in Gegenlagerbohrungen 187 eingeführt ist, wobei die Lagerbohrung 186 im Basisteil 177 angeordnet ist. Die Gegenlagerbohrungen 187 sind in einem Lagerbock 188 angeordnet, welcher zwei um eine Breite 189 voneinander distanzierte Lagerstege 190 besitzt. Die Breite 189 ist dabei größer als eine Basisteilbreite 191, welche parallel zur ersteren gemessen wird. Der Lagerbock 188 ist auf einer Linearführungseinheit 192 angeordnet. Diese besteht aus einem Schlitten 193, der von einer oder mehreren Linearführungswellen 194 durchragt wird. Diese besitzen Wellenachsen 195, welche parallel zur Oberfläche 27 und rechtwinkelig zur Fläche 70 verlaufen. Die Linearführungswellen 194 sind in Lageraufnahmen 196 bewegungsfest, lösbar oder unlösbar angeordnet, welche wiederum auf der Oberfläche 27 des Werkstückträgers 5 angeordnet sind. Auf der Lageraufnahme 196, die in einem dem Kernteil 43 abgewandten Bereich des Werkstückträgers 5 liegt, befindet sich ein Anschlag 197. Auf der Unterseite 76 des Kernteils 43 befindet sich ein Mitnehmer 198, welcher die Unterseite 76 in Richtung zum Werkstückträger 5 überragt. Nach erfolgtem Spritzvorgang wird der Kernteil 43 in entgegengesetzter Richtung vom Nestteil 44 wegbewegt, wobei das Werkstück 2 am Kern 45 haften bleibt, wodurch die Werkstückaufnahme 29, d.h. der Aufnahmezapfen 174 und die Schwenklagervorrichtung 175, mit dem Schlitten 193 längs der Linearführungswellen 194 in entgegengesetzter Richtung zum Nestteil 44 bewegt wird.

Erreicht nun der Kernteil 43 den Bereich des Anschlages 197, so stößt ein parallel zur Wellenachse 195 verlaufender Anschlagstift 199 an eine Seitenfläche 200 des Aufnahmezapfens 174. Dabei wird dieser um die Schwenkachse 176 in Richtung zum Nestteil 44 verschwenkt und damit auch das Werkstück 2, welches am Fortsatz 179 bewegungsfest angeordnet ist. Befindet sich in weiterer Folge die Planfläche 59 des Werkstückes 2 in einem Abstand zur Außenfläche 67 des Kerns 45, so kann der Werkstückträger 5 in Förderrichtung - Pfeil 87 - weiterbewegt werden.

Schließlich ist in den Fig. 17 und 18 eine weitere Ausführungsvariante der Transporteinrichtung 1 dargestellt. Diese weist wiederum Werkstückträger 5 auf, welche, eine Kettenform bildend, über Gelenkanordnungen 201 miteinander verbunden sind. Auf der Oberseite 24 der Werkstückträger 5 sind Werkstückaufnahmevorrichtungen 29 angeordnet, welche als Handhabungsvorrichtungen 143 ausgebildet sind, die über Haltevorrichtungen 148 mit der Oberseite 24 verbunden sind. Die Handhabungsvorrichtung 143 besteht aus zwei Klemmbügeln 154, welche symmetrisch und spiegelbildlich zur Symmetrieebene 138 verlaufen und die mittels Schwenkantrieb 159 um in der Haltevorrichtung 148 angeordnete Schwenkachsen 150 verschwenkbar ausgebildet sind.

Die Transporteinrichtung 1 weist ein Gestell 18 auf, welches Längsprofile 19 besitzt. Diese sind so angeordnet, daß sie einen rechteckigen Querschnitt des Gestells 18 bilden, wobei je zwei Längsprofile 19 paarweise zueinander in einer horizontalen Ebene angeordnet sind, sodaß jeweils zwei in einer horizontalen Ebene zueinander liegende Längsprofile 19 Gestellteile 202 ausbilden. Die Gestellteile 202 sind um eine Höhe 203 zueinander distanziert und weisen die Führungsvorrichtungen 8 für die Werkstückträger 5 auf, wobei eine Führungsvorrichtung 8, welche dem durch das Formnest 46 und den Kern 45 gebildeten Formhohlraum 204 benachbart ist, zur Führung eines Lasttrumes 205 dient, welches durch die kettenförmigen Werkstückträger 5 gebildet wird, welche in Förderrichtung - Pfeil 206 - bewegt werden und die rechtwinkelig zur Mittelachse 33 verlaufen. Am anderen Gestellteil 202 ist die Führungsvorrichtung 8 für das Leertrum 207 angeordnet, welches aus jenen kettenförmig miteinander verbundenen Werkstückträgern 5 gebildet wird, die in entgegengesetzter Richtung zur Förderrichtung - Pfeil 206 - in einer Rücklaufrichtung - Pfeil 208 - bewegt werden. Das Formnest 46 weist im Bereich der Fläche 70 einen Nestdurchmesser 79 auf und erstreckt sich rechtwinkelig zur Fläche 70 um eine Formnesttiefe 80 und weist in der Formnesttiefe 80 den Nestdurchmesser 81 auf, welcher geringer ist als der Nestdurchmesser 79. Der Kernteil 43, d.h. der Kern 45, weist im Bereich der der Fläche 70 zugewandten Stirnfläche 49 den Kerndurchmesser 57 auf. Dieser ist kleiner als der Nestdurchmesser 79.

Der Kernteil 43 besitzt eine Ausnehmung 72 mit einer der Fläche 70 zugewandten Planfläche 73, welche von der Stirnfläche 49 um die Ausnehmungstiefe 74 in entgegengesetzter Richtung zur Fläche 70 beabstandet ist. Die Ausnehmung 72, insbesondere die Planfläche 73, wird von einer der Mittelachse 33 zugewandten Außenstirnfläche 209, welche z.B. rechtwinkelig zur Stirnfläche 49 verläuft, und von einer der Mittelachse 33 abgewandten Innenstirnfläche 210 begrenzt. Sowohl die Außenstirnfläche 209 als auch die Innenstirnfläche 210 können bereichsweise konzentrisch um die Mittelachse 33 verlaufen, wobei die Außenstirnfläche 209 in diesem Bereich von der Mittelachse 33 um einen Außenradius 211 und die Innenstirnfläche 210 von der Mittelachse 33 um einen Innenradius 212 beabstandet ist, welche kleiner ist als der Außenradius 211. Aus der Differenz des Außenradius 211 und des Innenradius 212 wird eine Ausnehmungsbreite 213 gebildet.

Der Innenradius 212 ist so dimensioniert, daß er um einen Abstand 214 größer ist als der halbe Nestdurchmesser 79. Dadurch wird ein konzentrisch um die Mittelachse 33 verlaufender Ringsteg 215 gebildet, welcher den Formhohlraum 204 von der Ausnehmung 72 trennt, sodaß im Formzustand kein plastifiziertes Material, das dem Formhohlraum 204 über den Angußkanal 98 zugeführt wird, aus dem Formhohlraum 204 in Richtung zur Ausnehmung 72 entweichen kann. In der Ausnehmung 72 befinden sich die Klemmbügel 154 der als Handhabungsvorrichtung 143 ausgebildeten Werkstückaufnahmevorrichtung 29. Während die Innenstirnfläche 210 über deren gesamten Verlauf z.B. konzentrisch um die Mittelachse 33 verläuft, verläuft die Außenstirnfläche 209 nur halbkreisförmig konzentrisch um die Mittelachse 33 und besitzt im Anschluß an diesen halbkreisförmigen Bereich einen Auslaufbereich 216, der ausgehend von einer durch die Mittelachse 33 verlaufenden, parallel zur Oberseite 24 der Werkstückträger 5 angeordneten Horizontalebene 217 bis zu einer z.B. parallel zur Horizontalebene 217 von dieser in Richtung zur Oberseite 24 beabstandeten Innenfläche 218 verläuft. Diese begrenzt gemeinsam mit einer z.B. rechtwinkelig zu dieser verlaufenden Fläche 219 einen im Kernteil 43 angeordneten Ausnehmungsbereich 99, wobei die Fläche 219 von der Innenfläche 218 bis zur parallel zur Horizontalebene 217 verlaufenden Unterseite 76 des Formwerkzeuges 42, insbesondere des Kernteils 43, verläuft. Der Auslaufbereich 216 der Außenstirnfläche 209 bildet im Bereich der Innenfläche 218 eine Ausnehmungsbreite 220 aus, welche zwei symmetrisch um eine Vertikalebene 221 angeordnete Schnittkanten 222 voneinander distanziert, welche mit der Planfläche 73 und der dieser zugewandten Fläche 70 eine Ausnehmungsöffnung 223 umgrenzen, die als Freistellung für die Werkstückaufnahmevorrichtung 29 dient, welche beim Formzustand des Formwerkzeuges 42 in einer Warteposition in der Ausnehmung 72 verbleibt und dadurch die Klemmbügel 154 die Ausnehmungsöffnung 223 in Richtung zur Oberseite 24 der Werkstückträger 5 durchragen.

Auch der Nestteil 44 besitzt einen Ausnehmungsbereich 99, gebildet durch eine in einer Ebene mit der Innenfläche 218 liegenden Innenfläche 224 und einer von dieser in Richtung zur Unterseite 76 des Nestteils 44 verlaufenden, der Fläche 219 zugewandten Fläche 225. Durch die beiden Ausnehmungsbereiche 99 wird eine Ausnehmung 72 gebildet, in der zumindest das Lasttrum 205, im vorliegenden Ausführungsbeispiel sowohl das Lasttrum 205 als auch das Leertrum 207, mit den entsprechenden um die Höhe 203 voneinander distanzierten Gestellteilen 202 und den dazugehörigen Führungsvorrichtungen 8 sowie Teilbereichen von zumindest an einem Gestellteil 202 angeordneten Stützprofilen 226 des Gestelles 18, welches auch in seiner Gesamtheit in dieser Ausnehmung 72 angeordnet sein kann, befindlich ist. Die Innenflächen 224 sind dabei von der Oberseite 24 der Werkstückträger 5 des Lasttrumes 205 um einen Abstand 227 in Richtung zur Mittelachse 33 beabstandet und die einander zugewandte Fläche 225 und Fläche 219 sind voneinander um eine Ausnehmungsbreite 228 beabstandet, welche größer ist als eine Gestellbreite 229, die beispielsweise die Stützprofile 226 voneinander distanziert.

Die beiden Gestellteile 202, welche parallel zur Horizontalebene 217 verlaufen, sind, wie bereits beschrieben, durch die Höhe 203 voneinander beabstandet, sodaß zwischen einem oberen Gestellteil 202 und einem unteren Gestellteil 202 ein Zwischenbereich 230 geschaffen wird, der im vorliegendem Ausführungsbeispiel sowohl von Führungssäulen 231 des Formwerkzeuges 42 als auch von Stützsäulen 232 einer Spritzgußanlage 233 durchragt wird. Selbstverständlich ist es jedoch auch möglich, daß sich die Führungssäulen 231 und/oder die Stützsäulen 232 in einem Bereich befinden, welcher vom Leertrum 207 in entgegengesetzter Richtung zum Formhohlraum 204 oder welcher vom Lasttrum 205 in Richtung zum Formhohlraum 204 beabstandet ist.

Die Führungssäulen 231 weisen z.B. einen Gewindeabschnitt 234 auf, welcher in einer Gewindebohrung 235 angeordnet ist, die die Fläche 225 des Nestteils 44 in entgegengesetzter Richtung zur Fläche 70, d.h. in Richtung einer Anschlußplatte 236 der Spritzgußanlage 233 überragt. Der Kernteil 43 weist eine Führungsvorrichtung 237 für die Führungssäule 231 auf, welche z.B. durch eine Gleitlagerbuchse 238 gebildet wird, die den zylindrischen Teil der Führungssäule 231 bereichsweise konzentrisch umfaßt.

Das Formwerkzeug 42 weist auch in einem vom Formhohlraum 204 in entgegengesetzter Richtung zu den Werkstückträgern 5 gelegenen Bereich derartige, im Nestteil 44 angeordnete Führungssäulen 231 mit diesen zugeordneten, im Kernteil 43 angeordneten Führungsvorrichtungen 237 auf. Der Nestteil 44 ist über Befestigungselemente 239 mit der Anschlußplatte 236 der Spritzgußanlage 233 verbunden. Die Spritzgußanlage 233 besitzt z.B. in der Anschlußplatte 236 starr angeordnet die Stützsäulen 232 und weist in einem von der Anschlußplatte 236 abgewandten Endbereich eine über die Stützsäulen 232 mit der Spritzgußanlage 233 verbunde Gegenplatte 240 auf. Die Gegenplatte 240 dient der Haltung zumindest einer Antriebsvorrichtung 241, insbesondere eines medienbetätigbaren Zylinders 242, dessen Zylinderstange 243 mit z.B. dem Kernteil 43 verbunden ist, wodurch es nun möglich ist, den Kernteil 43 längs der Führungssäulen 231 und/oder Stützsäulen 232 linear zu bewegen.

Durch die Ausnehmung 72 für die Werkstückaufnahmevorrichtung 29 und/oder die Werkstückträger 5 ist es möglich, diese unmittelbar benachbart zum Formhohlraum 204 anzuordnen und trotzdem das Formwerkzeug 42 zu schließen, d.h. den Kernteil 43 und dessen Stirnfläche 49 in eine anliegende Lage zum Nestteil 44, d.h. zur Fläche 70 zu bringen, ohne daß die Werkstückaufnahmevorrichtung 29 und/oder die Werkstückträger 5 bzw. die Gestellteile 202 einer Belastung - in Form von Druckkräften - ausgesetzt werden.

Wird nun nach erfolgtem Spritzvorgang entformt, d.h. wird der Kernteil 43 in entgegengesetzter Richtung zum Nestteil 44 in Richtung zur Gegenplatte 240 bewegt, so bleibt im vorliegenden Beispiel das Werkstück 2 am Kern 45 haften. Befindet sich beim Entformen die dem Nestteil 44 zugewandte Planfläche 59 des Werkstückes 2 in einer Ebene mit der Fläche 70, so sind die Klemmbügel 154 nicht mehr von der durch die Außenstirnfläche 209 und Innenstirnfläche 210 umgrenzten Ausnehmung 72, sodaß diese über den Schwenkantrieb 159 aufeinander zubewegt werden können und so an den Außenflächen 67 des Werkstückes 2 anliegen, und dieses mit den Klemmfortsätzen 155 festhalten.

Danach kann der Kernteil 43 weiter in Richtung zur Gegenplatte 240 bewegt werden, wodurch das Werkstück 2 vom Kern 45 abgezogen wird. Im Entformungszustand hat dann der Kernteil 43 eine solche Lage, daß die Kernstirnfläche 55 von der der Gegenplatte 240 zugewandten Planfläche 59 des Werkstückes 2 um einen Abstand in Richtung zur Gegenplatte 240 distanziert ist, sodaß das Werkstück 2 mit der Werkstückaufnahmevorrichtung 29 und dem zugehörigen Werkstückträger 5 in Förderrichtung - Pfeil 206 - bewegt werden kann. Dies erlaubt eine Entnahme von Werkstücken 2 aus Formwerkzeugen 42 ohne aufwendige Manipulationsvorrichtungen und daraus resultierend eine kurze Taktzeit der Transporteinrichtung 1. Selbstverständlich kann die Werkstückaufnahmevorrichtung 29 auch direkt auf einer Antriebseinrichtung 4 einer Transporteinrichtung 1 angeordnet sein.

Der Ordnung halber sei abschließend darauf hingewiesen, daß zum besseren Verständnis des Aufbaus der Transporteinrichtung 1, des Werkzeuges und der Werkstückaufnahmevorrichtung 29 diese bzw. deren Bestandteile teilweise unmaßstäblich und/oder vergrößert und/oder verkleinert dargestellt wurden.

Die den eigenständigen, erfinderischen Lösungen zugrundeliegende Aufgabe kann der Beschreibung entnommen werden.

Vor allem können die einzelnen in den Fig. 1 bis 18 gezeigten Ausführungen den Gegenstand von eigenständigen, erfindungsgemäßen Lösungen bilden. Die diesbezüglichen erfindungsgemäßen Lösungen sind den Detailbeschreibungen dieser Figuren zu entnehmen.

### Bezugszeichenaufstellung

- 1: Transporteinrichtung
- 2: Werkstück
- 3: Spritzgußteil
- 4: Antriebseinrichtung
- 5: Werkstückträger

- 6: Längsstirnfläche
- 7: Unterseite
- 8: Führungsvorrichtung
- 9: Vertikalrolle
- 10: Horizontalrolle

- 11: Vertikaldrehachse
- 12: Lauffläche
- 13: Seitenführungsbahn
- 14: Lauffläche
- 15: Horizontaldrehachse

- 16: Höhenführungsbahn
- 17: Achselement
- 18: Gestell
- 19: Längsprofil
- 20: Querprofil

- 21: Höhenprofil
- 22: Riemen
- 23: Vertiefung
- 24: Oberseite
- 25: Vertiefungsnut

- 26: Einsatzelement
- 27: Oberfläche
- 28: Verbindungsvorrichtung
- 29: Werkstückaufnahmevorrichtung
- 30: Abstand

- 31: Steg
- 32: Zwischenbereich
- 33: Mittelachse
- 34: Ringsteg
- 35: Verbindungssteg

- 36: Innenstirnfläche
- 37: Ringseitenfläche
- 38: Ringbreite
- 39: Innenringdurchmesser
- 40: Außenringdurchmesser

- 41: Außenstirnfläche
- 42: Formwerkzeug
- 43: Kernteil
- 44: Nestteil
- 45: Kern

- 46: Formnest
- 47: Einformung
- 48: Einformungsplanfläche
- 49: Stirnfläche
- 50: Platte

- 51: Einformungstiefe
- 52: Einformungsstirnfläche
- 53: Einformungsdurchmesser
- 54: Mantelfläche
- 55: Kernstirnfläche

- 56: Kerndurchmesser
- 57: Kerndurchmesser
- 58: Kernlänge
- 59: Planfläche
- 60: Werkstückhöhe

- 61: Dicke
- 62: Werkstücktiefe
- 63: Stirnfläche
- 64: Innendurchmesser
- 65: Durchmesser

- 66: Schnittebene
- 67: Außenfläche
- 68: Mantellinie
- 69: Winkel
- 70: Fläche

- 71: Außenfläche
- 72: Ausnehmung
- 73: Planfläche
- 74: Ausnehmungstiefe
- 75: Ausnehmungsdurchmesser

- 76: Unterseite
- 77: Schlitz
- 78: Schlitztiefe
- 79: Nestdurchmesser
- 80: Formnesttiefe

- 81: Nestdurchmesser
- 82: Angußbuchse
- 83: Spritzdüse
- 84: Schlitzbreite
- 85: Stegbreite

- 86: Bund
- 87: Pfeil
- 88: Antriebsvorrichtung
- 89: Hydraulikzylinder
- 90: Hohlraum

- 91: Führungsvorrichtung
- 92: Führungslänge
- 93: Endbereich
- 94: Mittelachse
- 95: Achsabstand

- 96: Verteilungskanal
- 97: Kanaltiefe
- 98: Angußkanal
- 99: Ausnehmungsbereich
- 100: Tiefe

- 101: Verbindungskanal
- 102: Ausnehmung
- 103: Ausnehmungsfläche
- 104: Symmetrieebene
- 105: Ausnehmungstiefe

- 106: Querfläche
- 107: Rollenfläche
- 108: Vertiefung
- 109: Vertiefungsdurchmesser
- 110: Vertiefungsdurchmesser

- 111: Innenfläche
- 112: Tiefe
- 113: Bohrung
- 114: Bohrungsdurchmesser
- 115: Planfläche

- 116: Planfläche
- 117: Durchmesser
- 118: Durchmesser
- 119: Ansatz
- 120: Mittelachse

- 121: Ansatzdurchmesser
- 122: Ansatzdurchmesser
- 123: Ansatzfläche
- 124: Durchmesser
- 125: Durchmesserteil

- 126: Durchmesserteil
- 127: Antriebsvorrichtung
- 128: Hydraulikzylinder
- 129: Bohrung
- 130: Dorn

- 131: Spitze
- 132: Haltesteg
- 133: Anschlagteil
- 134: Seitenflächen
- 135: Seitenflächen

- 136: Formhohlraum
- 137: Durchtrittsöffnung
- 138: Symmetrieebene
- 139: Symmetrieebene
- 140: Abstand

- 141: Teilungsabstand
- 142: Frontfläche
- 143: Handhabungsvorrichtung
- 144: Linearbewegungseinheit
- 145: Linearzylinder

- 146: Schlitten
- 147: Oberseite
- 148: Haltevorrichtung
- 149: Lageröffnung
- 150: Schwenkachse

- 151: Lagerzapfen
- 152: Distanz
- 153: Lagerbohrung
- 154: Klemmbügel
- 155: Klemmfortsatz

- 156: Klemmdurchmesser
- 157: Krümmungsstirnfläche
- 158: Krümmungsradius
- 159: Schwenkantrieb
- 160: Zylinder

- 161: Abstand
- 162: Zylinderstange
- 163: Schwenklagerung
- 164: Zwischenbereich
- 165: Schwenkvorrichtung

- 166: Lagervorrichtung
- 167: Seitenfläche
- 168: Abstand
- 169: Distanz
- 170: Ringstirnfläche

- 171: Schlitzbreite
- 172: Schlitzhöhe
- 173: Schlitzseitenfläche
- 174: Aufnahmezapfen
- 175: Schwenklagervorrichtung

- 176: Schwenkachse
- 177: Basisteil
- 178: Stirnfläche
- 179: Fortsatz
- 180: Seitenlänge

- 181: Seitenlänge
- 182: Fortsatzhöhe
- 183: Seitenfläche
- 184: Zwischenraum
- 185: Schwenklagerzapfen

- 186: Lagerbohrung
- 187: Gegenlagerbohrung
- 188: Lagerbock
- 189: Breite
- 190: Lagersteg

- 191: Basisteilbreite
- 192: Linearführungseinheit
- 193: Schlitten
- 194: Linearführungswelle
- 195: Wellenachse

- 196: Lageraufnahme
- 197: Anschlag
- 198: Mitnehmer
- 199: Anschlagstift
- 200: Seitenfläche

- 201: Gelenkanordnung
- 202: Gestellteil
- 203: Höhe
- 204: Formhohlraum
- 205: Lasttrum

- 206: Pfeil
- 207: Leertrum
- 208: Pfeil
- 209: Außenstirnfläche
- 210: Innenstirnfläche

- 211: Außenradius
- 212: Innenradius
- 213: Ausnehmungsbreite
- 214: Abstand
- 215: Ringsteg

- 216: Auslaufbereich
- 217: Horizontalebene
- 218: Innenfläche
- 219: Fläche
- 220: Ausnehmungsbreite

- 221: Vertikalebene
- 222: Schnittkante
- 223: Ausnehmungsöffnung
- 224: Innenfläche
- 225: Fläche

- 226: Stützprofil
- 227: Abstand
- 228: Ausnehmungsbreite
- 229: Gestellbreite
- 230: Zwischenbereich

- 231: Führungssäule
- 232: Stützsäule
- 233: Spritzgußanlage
- 234: Gewindeabschnitt
- 235: Gewindebohrung

- 236: Anschlußplatte
- 237: Führungsvorrichtung
- 238: Gleitlagerbuchse
- 239: Befestigungselement
- 240: Gegenplatte

- 241: Antriebsvorrichtung
- 242: Zylinder
- 243: Zylinderstange

## Patentansprüche

1. Transporteinrichtung (1) für Formteile, insbesondere für Spritzgußteile (3), mit mehreren über eine Antriebseinrichtung (4) entlang einer Führungsvorrichtung (8) zu zumindest einem Formwerkzeug (42) verstellbaren Werkstückträgern (5), die jeweils mit zumindest einer Werkstückaufnahmevorrichtung (29) versehen sind, wobei das Formwerkzeug (42) einen Kernteil (43) mit zumindest einem Kern (45) und einen Nestteil (44) mit zumindest einem Formnest (46) aufweist und mit einer zwischen dem Kern- und Nestteil (43, 44) an das zumindest eine Formnest (46) angrenzenden und/oder von einem durch den Kern (45) und das Formnest (46) gebildeten Formhohlraum (136, 204) getrennt angeordneten Ausnehmung (72) versehen ist und daß jede der in der Ausnehmung (72) positionierbaren Werkstückaufnahmevorrichtungen (29) taktweise aufeinanderfolgend zum Formnest (46) verfahrbar und die Ausnehmung (72) während des Formvorganges verschließt und/oder in dieser zumindest zum Teil angeordnet ist, **dadurch gekennzeichnet, daß** Mittel zum Halten und Positionieren der Werkstückaufnahmevorrichtung (29) im Formwerkzeug (42) vorgesehen sind.

2. Transporteinrichtung nach Anspruch 1, **dadurch gekennzeichnet, daß** die Werkstückaufnahmevorrichtung (29) einen konzentrisch um eine Mittelachse (33) des Formwerkzeuges (42) verlaufenden Ringsteg (34) und einen rechtwinkelig zu dieser verlaufenden, lösbar oder unlösbar mit dem Ringsteg (34) verbundenen Verbindungssteg (35) aufweist, welcher über eine Verbindungsvorrichtung (28) mit dem Werkstückträger (5) verbunden ist.

3. Transporteinrichtung nach Anspruch 1 oder 2 der vorhergehenden Ansprüche, **dadurch gekennzeichnet, daß** die Ausnehmung (72) in einander zugewandten Stirnflächen (49, 70) im Kern- und/oder Nestteil (43; 44) vertieft angeordnet ist.

4. Transporteinrichtung nach einem der Ansprüche 1 bis 3, **dadurch gekennzeichnet, daß** im Nestteil (44) ein Schlitz (77) angeordnet ist, welcher von der Ausnehmung (72) bis zu einer Unterseite (76) des Formwerkzeuges (42) bzw. des Nestteils (44) verläuft.

5. Transporteinrichtung nach einem der Ansprüche 1 bis 4, **dadurch gekennzeichnet, daß** während des Spritzvorganges der Ringsteg (34) in der Ausnehmung (72) und ein Verbindungssteg (35) der Werkstückaufnahmevorrichtung (29) im Schlitz (77) angeordnet ist.

6. Transporteinrichtung nach einem der Ansprüche 1 bis 5, **dadurch gekennzeichnet, daß** die Werkstückaufnahmevorrichtung (29) einen Teil des Formnestes (46), insbesondere Oberflächenteile des Formnestes (46), ausbildet.

7. Transporteinrichtung nach einem der Ansprüche 1 bis 6, **dadurch gekennzeichnet, daß** der Kernteil (43) und/oder die Werkstückaufnahmevorrichtung (29) eine Einformung (47) aufweist, welche ein Formnest (46) für einen Teilbereich, insbesondere für einen Bund (86), des Spritzgußteils (3) ausbildet.

8. Transporteinrichtung nach einem der Ansprüche 1 bis 7, **dadurch gekennzeichnet, daß** die Ausnehmung (72) durch im Kern- und Nestteil (43, 44) angeordnete Ausnehmungsbereiche (99) gebildet ist, die jeweils an einer dem Werkstückträger (5) zugewandten Unterseite (76) des Kern- und (43) und Nestteils (44) angeordnet sind.

9. Transporteinrichtung nach Anspruch 1, **dadurch gekennzeichnet, daß** der Werkstückträger (5) eine diesen in Richtung zum Formwerkzeug (42) begrenzende Oberseite (24) aufweist, welche in Richtung der dieser abgewandten Unterseite (7) von einer Vertiefung (108) überragt ist und daß sich ausgehend von der Vertiefung (108) in Richtung der Unterseite (7) eine Bohrung (113) rechtwinkelig zur Oberseite (24) erstreckt.

10. Transporteinrichtung nach Anspruch 9, **dadurch gekennzeichnet, daß** in der Vertiefung (108) die Werkstückaufnahmevorrichtung (29) lösbar und relativbeweglich angeordnet ist.

11. Transporteinrichtung nach einem der Ansprüche 1 bis 10, **dadurch gekennzeichnet, daß** die Werkstückaufnahmevorrichtung (29) kegelstumpfförmig ausgebildet und durch parallel zueinander verlaufende, einander abgewandte Planflächen (115, 116) begrenzt ist, daß die Werkstückaufnahmevorrichtung (29) einen die Planfläche (115) in entgegengesetzter Richtung zur Planfläche (116) überragenden kegelstumpfförmigen Ansatz (119) aufweist.

12. Transporteinrichtung nach Anspruch 11, **dadurch gekennzeichnet, daß** der Ansatz (119) eine sich in Richtung zum Formwerkzeug (42) konisch verjüngende Form aufweist.

13. Transporteinrichtung nach Anspruch 11 oder 12, **dadurch gekennzeichnet, daß** im Spritzzustand des Formwerkzeuges (42) der Ansatz (119) in der Ausnehmung (72) angeordnet ist und die Ansatzfläche (123) an einer die Ausnehmung (72) in Richtung zum Formwerkzeug (42) begrenzenden Planfläche (73) anliegt.

14. Transporteinrichtung nach einem der Ansprüche 11 bis 13, **dadurch gekennzeichnet, daß** die Werkstückaufnahmevorrichtung (29) mit einer Bohrung (129) versehen ist, die im Bereich des Ansatzes (119) konisch verjüngend in Richtung zum Formwerkzeug (42) verläuft und in der ein über eine Antriebsvorrichtung (127) relativ zum Formwerkzeug (42) beweglicher Dorn (130) angeordnet ist

15. Transporteinrichtung nach Anspruch 14, **dadurch gekennzeichnet, daß** der Dorn (130) eine kegelförmige Spitze (131) aufweist, die im Spritzzustand des Formwerkzeuges (42) unterhalb einer Ansatzfläche (123) des Ansatzes (119) angeordnet ist.

16. Transporteinrichtung nach einem der Ansprüche 1 bis 15, **dadurch gekennzeichnet, daß** der Formteil über einen aus Kunststoff gebildeten Haltesteg (132) bewegungsfest mit einem Werkstückträger (5) und/oder der Werkstückaufnahmevorrichtung (29) verbunden und lageorientiert gehaltert ist und daß der Haltesteg (132) in die Bohrung (129) vorragt und/oder einen Werkstückteilbereich bildet.

17. Transporteinrichtung nach einem der Ansprüche 1 bis 18, **dadurch gekennzeichnet, daß** im Nestteil (44) mehrere Ausnehmungen (72) angeordnet sind, die parallel zueinander verlaufende Symmetrieebenen (139) besitzen, die von einer Symmetrieebene (138) einer oder mehrerer Formnester (46) um gleiche, rechtwinkelig zur Symmetrieebene (138) gemessene Abstände (140) distanziert sind.

18. Transporteinrichtung nach Anspruch 19, **dadurch gekennzeichnet, daß** die Abstände (140) Teilungsabständen (141) zweier benachbarter Werkstückträger (5) entsprechen.

19. Transporteinrichtung nach Anspruch 1, **dadurch gekennzeichnet, daß** die Werkstückaufnahmevorrichtung (29) als Handhabungsvorrichtung (143) ausgebildet ist.

20. Transporteinrichtung nach Anspruch 19, **dadurch gekennzeichnet, daß** die Handhabungsvorrichtung (143) bzw. die Werkstückaufnahmevorrichtung (29) auf einer Linearbewegungseinheit (144) lösbar oder unlösbar angeordnet ist, die auf der Oberseite (24) des Werkstückträgers (5) angeordnet ist.

21. Transporteinrichtung nach Anspruch 20, **dadurch gekennzeichnet, daß** die Linearbewegungseinheit (144) vorzugsweise durch einen Linearzylinder (145) gebildet ist, welcher einen Schlitten (146) mit einer dem Formwerkzeug (42) zugewandten Oberseite (147) aufweist, auf der eine Haltevorrichtung (148) für die Handhabungsvorrichtung (143) angeordnet ist.

22. Transporteinrichtung nach Anspruch 21, **dadurch gekennzeichnet, daß** Stege (31) der Haltevorrichtung (148) Lageröffnungen (149) zur Aufnahme von Lagerzapfen (151) aufweisen, welche Schwenkachsen (150) besitzen, die parallel zur Oberseite (147) des Schlittens (146) verlaufen.

23. Transporteinrichtung nach Anspruch 22, **dadurch gekennzeichnet, daß** die Schwenkachsen (150) um eine parallel zur Oberseite (147) gemessene Distanz (142) voneinander beabstandet sind und jeweils eine Lagerbohrung (153) durchragen, welche in jeweils einem Verbindungssteg (35) der Handhabungsvorrichtung (143) angeordnet sind.

24. Transporteinrichtung nach einem der Ansprüche 1 bis 23, **dadurch gekennzeichnet, daß** der Verbindungssteg (35) einen oder mehrere Klemmbügel (154) aufweist, welcher jeweils beispielsweise zwei in Richtung des Formteiles vorragende Klemmfortsätze (155) aufweist.

25. Transporteinrichtung nach Anspruch 24, **dadurch gekennzeichnet, daß** die Klemmfortsätze (155) im geklemmten Zustand der Klemmbügel (154) an einer Außenfläche (67) des Formteiles anliegen.

26. Transporteinrichtung nach Anspruch 24 oder 25, **dadurch gekennzeichnet, daß** die Klemmbügel (154) in entgegengesetzter Richtung zueinander um die Schwenkachsen (150) in eine Öffnungsposition mittels eines Schwenkantriebes (159), insbesondere ein doppelt wirkender Zylinder (160) mit einander in entgegengesetzter Richtung sich erstreckenden Zylinderstangen (162), schwenkbar gelagert sind.

27. Transporteinrichtung nach Anspruch 1, **dadurch gekennzeichnet, daß** die Werkstückaufnahmevorrichtung (29) durch einen Aufnahmezapfen (174) gebildet ist.

28. Transporteinrichtung nach Anspruch 27, **dadurch gekennzeichnet, daß** der Aufnahmezapfen (174) um eine parallel zur Oberfläche (27) des Werkstückträgers (5) und rechtwinkelig zur Symmetrieebene (138) verlaufende Schwenkachse (176) in einer Schwenklagervorrichtung (175) schwenkbar gelagert ist.

29. Transporteinrichtung nach Anspruch 28, **dadurch gekennzeichnet, daß** die Schwenklagervorrichtung (175) einen auf einer Linearführungseinheit (192) angeordneten Lagerbock (188) aufweist und die Linearführungseinheit (192) aus einem Schlitten (193) und einer oder mehreren Linearführungswellen (194) gebildet wird, welche in Lageraufnahmen (196) bewegungsfest, lösbar oder unlösbar angeordnet sind, die auf der Oberfläche (27) des Werkstückträgers (5) angeordnet sind.

30. Transporteinrichtung nach Anspruch 29, **dadurch gekennzeichnet, daß** zumindest eine Lageraufnahme (196) einen Anschlag (197) aufweist.

31. Transporteinrichtung nach einem der Ansprüche 1 bis 30, **dadurch gekennzeichnet, daß** auf der Unterseite (76) des Kernteils (43) ein Mitnehmer (198) angeordnet ist.

32. Formwerkzeug (42) zur Herstellung von Formteilen, insbesondere Spritzgußteile (3), mit einem Kernteil (43) mit einem oder mehreren starr und/oder beweglichen Kernen (45) und/oder einem Nestteil (44) mit zumindest einem Formnest (46), welche relativ zueinander beweglich ausgebildet sind, wobei zwischen dem Kern- und Nestteil (43, 44) eine an das zumindest eine Formnest (46) angrenzende und/oder von einem durch den Kern (45) und das Formnest (46) gebildeten Formhohlraum (136, 204) getrennt angeordnete Ausnehmung (72) zur bedarfsweisen Aufnahme zumindest einer auf einem Werkstückträger (5) angeordneten Werkstückaufnahmevorrichtung (29) angeordnet ist, **dadurch gekennzeichnet, daß** die Werkstückträger (5) mit der zumindest einen Werkstückaufnahmevorrichtung (29) entlang einer Führungsvorrichtung (8) einer neben dem Formwerkzeug (42) angeordneten Transporteinrichtung (1) nach einem der Ansprüche 1 bis 31 verfahrbar angeordnet ist.

33. Verfahren zum Transport von Formteilen, insbesondere für Spritzgußteile (3), bei welchem ein Formwerkzeug (42), bestehend aus einem Kernteil (43) und einem Nestteil (44), geschlossen wird, worauf Kunststoff in zumindest einen zwischen dem Kern- und Nestteil (43, 44) ausgebildeten Formhohlraum (136, 204) eingebracht wird und sich verfestigt und im Anschluß das Formwerkzeug (42) durch Relativbewegung des Nestteils (44) und des Kernteils (43) geöffnet wird, worauf der oder die Formteile freigegeben und über eine Transporteinrichtung (1) abtransportiert werden, wobei während des Schließens des Formwerkzeuges (42) zur Bildung des Formhohlraumes (136, 204) zumindest eine Werkstückaufnahmevorrichtung (29) in einer Ausnehmung (72) im Formwerkzeug (42) positioniert wird, **dadurch gekennzeichnet, daß** nach dem Öffnen des Formwerkzeuges (42) die zumindest eine im Formwerkzeug (42) angeordnete Werkstückaufnahmevorrichtung (29) freigegeben und über diese der verfestigte Formteil lageorientiert aus dem Formwerkzeug (42) mittels einer Transporteinrichtung (1) nach einem oder mehreren der Ansprüche 1 bis 31 abtransportiert wird.

## Claims

1. Conveyor system (1) for mouldings, in particular for injection moulded parts (3), having several workpiece holders (5) which can be displaced along a guide mechanism (8) by means of a drive system (4) to at least one mould (42), each of which has a workpiece locating device (29), the mould (42) having a core part (43) with at least one core (45) and a nest part (44) with at least one mould nest (46) and with a recess (72) disposed between the core and nest parts (43, 44) adjoining the at least one mould nest (46) and/or separated from a cavity (136, 204) formed by the core (45) and the mould nest (46), and each of the workpiece locating devices (29), which can be positioned in the recess (72), is displaceable in a timed cycle one after the other to the mould nest (46), and the recess (72) is closed and/or is at least partially disposed therein during the moulding process, **characterised in that** means are provided for retaining and positioning the workpiece locating device (29) in the mould (42).

2. Conveyor system as claimed in claim 1, **characterised in that** the workpiece locating device (29) has an annular web (34) extending concentrically about a mid-axis (33) of the mould (42) as well as a connecting web (35) extending perpendicular to it and releasably or non-releasably connected to the annular web (34), which is connected to the workpiece holder (5) by means of a connecting mechanism (28).

3. Conveyor system as claimed in claim 1 or 2 of the preceding claims, **characterised in that** the recess (72) is provided in the core and/or nest part (43; 44) set back in mutually facing end faces (49, 70).

4. Conveyor system as claimed in one of claims 1 to 3, **characterised in that** the nest part (44) has a slot (77) which extends from the recess (72) to a bottom face (76) of the mould (42) or nest part (44).

5. Conveyor system as claimed in one of claims 1 to 4, **characterised in that**, during the injection process, the annular web (34) is disposed in the recess (72) and a connecting web (35) of the workpiece locating device (29) is disposed in the slot (77).

6. Conveyor system as claimed in one of claims 1 to 5, **characterised in that** the workpiece locating device (29) forms a part of the mould nest (46), in particular surface parts of the mould nest (46).

7. Conveyor system as claimed in one of claims 1 to 6, **characterised in that** the core part (43) and/or the workpiece locating device (29) has an inset (47) forming a mould nest (46) for a part region, in particular for a collar (86), of the injection moulded part (3).

8. Conveyor system as claimed in one of claims 1 to 7, **characterised in that** the recess (72) is formed by recessed regions (99) in the core and nest parts (43, 44), disposed respectively on a bottom face (76) of the core part (43) and nest part (44) directed towards the workpiece holder (5).

9. Conveyor system as claimed in claim 1, **characterised in that** the workpiece holder (5) has a top face (24) bounding it in the direction towards the mould (42), above which a recess (108) projects in the direction towards the bottom face (7) remote therefrom and a bore (113) extends from the recess (108) perpendicular to the top face (24) in the direction of the bottom face (7).

10. Conveyor system as claimed in claim 9, **characterised in that** the workpiece locating device (29) is releasably disposed in the recess (108) and is displaceable relative thereto.

11. Conveyor system as claimed in one of claims 1 to 10, **characterised in that** the workpiece locating device (29) is of a truncated cone shape and is bounded by mutually parallel planar surfaces (115, 116) directed away from one another, and the workpiece locating device (29) has a shoulder (119) of a truncated cone shape projecting out from the planar surface (115) in the direction opposite the planar surface (116).

12. Conveyor system as claimed in claim 11, **characterised in that** the shoulder (119) is of a conically tapering shape in the direction towards the mould (42).

13. Conveyor system as claimed in claim 11 or 12, **characterised in that** when the mould (42) is in injection mode, the shoulder (119) is disposed in the recess (72) and the shoulder surface (123) sits against a planar surface (73) bounding the recess (72) in the direction towards the mould (42).

14. Conveyor system as claimed in one of claims 11 to 13, **characterised in that** the workpiece locating device (29) has a bore (129) which extends in a conically tapering arrangement in the direction towards the mould (42) in the region of the shoulder (119) and a pin (130) is disposed therein, which is displaceable relative to the mould (42) by means of a drive mechanism (127).

15. Conveyor system as claimed in claim 14, **characterised in that** the pin (130) has a conical tip (131) which is disposed underneath a shoulder surface (123) of the shoulder (119) when the mould (42) is in injection mode.

16. Conveyor system as claimed in one of claims 1 to 15, **characterised in that** the moulding is connected to a workpiece holder (5) and/or the workpiece locating device (29) so as to be immobilised by means of a retaining web (132) made from plastic and is retained in a positioned orientation, and the retaining web (132) projects into the bore (129) and/or forms a workpiece part region.

17. Conveyor system as claimed in one of claims 1 to 18, **characterised in that** several recesses (72) with planes of symmetry (139) extending parallel with one another are provided in the nest part (44), spaced apart from a plane of symmetry (138) of one or more mould nests (46) by identical distances (140) as measured perpendicular to the plane of symmetry (138).

18. Conveyor system as claimed in claim 19, **characterised in that** the distances (140) correspond to pitch distances (141) between two adjacent workpiece holders (5).

19. Conveyor system as claimed in claim 1, **characterised in that** the workpiece locating device (29) is a manipulating mechanism (143).

20. Conveyor system as claimed in claim 19, **characterised in that** the manipulating mechanism (143) or workpiece locating device (29) is releasably or non-releasably mounted on a linear displacement unit (144) disposed on the top face (24) of the workpiece holder (5).

21. Conveyor system as claimed in claim 20, **characterised in that** the linear displacement unit (144) is preferably a linear cylinder (145) having a carriage (146) with a top face (147) directed towards the mould (42), on which a retaining mechanism (148) for the manipulating mechanism (143) is disposed.

22. Conveyor system as claimed in claim 21, **characterised in that** webs (31) of the retaining mechanism (148) have mounting bores (149) for receiving bearing pins (151), the pivot axes (150) of which extend parallel with the top face (147) of the carriage (146).

23. Conveyor system as claimed in claim 22, **characterised in that** the pivot axes (150) are spaced at a distance apart from one another, parallel with the top face (147), by a distance (142) and respectively extend through a mounting bore (153) disposed respectively in a connecting web (35) of the manipulating mechanism (143).

24. Conveyor system as claimed in one of claims 1 to 23, **characterised in that** the connecting web (35) has one or more clamps (154), each of which has two clamp extensions (155) projecting in the direction of the moulding, for example.

25. Conveyor system as claimed in claim 24, **characterised in that** the clamp extensions (155) sit against an external face (67) of the moulding when the clamps (154) are in the clamped state.

26. Conveyor system as claimed in claim 24 or 25, **characterised in that** the clamps (154) are mounted so as to pivot into an open position about the pivot axes (150) in opposite directions from one another by means of a pivot drive (159), in particular a double-acting cylinder (160) with cylinder rods (162) extending in opposite directions from one another.

27. Conveyor system as claimed in claim 1, **characterised in that** the workpiece locating device (29) is a locating pin (174).

28. Conveyor system as claimed in claim 27, **characterised in that** the locating pin (174) is mounted in a pivot bearing mechanism (175) so as to pivot about a pivot axis (176) extending parallel with the top face (27) of the workpiece holder (5) and perpendicular to the plane of symmetry (138).

29. Conveyor system as claimed in claim 28, **characterised in that** the pivot bearing mechanism (175) has a bearing block (188) disposed on a linear guide unit (192) and the linear guide unit (192) comprises a carriage (193) and one or more linear guide shafts (194) releasably or non-releasably mounted in bearing mounts (196) which are disposed on the top face (27) of the workpiece holder (5).

30. Conveyor system as claimed in claim 29, **characterised in that** at least one bearing mount (196) has a stop (197).

31. Conveyor system as claimed in one of claims 1 to 30, **characterised in that** a driver (198) is provided on the bottom face (76) of the core part (43).

32. Mould (42) for producing mouldings, in particular injection moulded parts (3), with a core part (43) having one or more rigid and/or displaceable cores (45) and/or a nest part (44) with at least one mould nest (46) which are displaceable relative to one another, a recess (72) being disposed between the core and nest parts (43, 44) adjacent to the at least one mould nest (46) and/or separated from a mould cavity (136, 204) formed between the core (45) and the mould nest (46) designed to receive at least one workpiece locating device (29) disposed on a workpiece holder (5) as and when necessary, **characterised in that** the workpiece holder (5) is disposed so as to be displaceable in conjunction with at least one workpiece locating device (29) along a guide mechanism (8) of a conveyor system (1) adjacent to the mould (42) as claimed in one of claims 1 to 31.

33. Method of conveying mouldings, in particular for injection moulded parts (3), in which a mould (42) consisting of a core part (43) and a nest part (44) is closed, after which a plastic substance is introduced into at least one mould cavity (136, 204) formed between the core and nest parts (43, 44) and solidifies, following which the mould (42) is opened by a relative displacement of the nest part (44) and the core part (43) so that the moulding or mouldings are released and fed away by means of a conveyor system (1), whereby, as the mould (42) is closed in order to form the mould cavity (136, 204), at least one workpiece locating device (29) is positioned in a recess (72) in the mould (42), **characterised in that**, after the mould (42) has been opened, the at least one workpiece locating device (29) disposed in the mould (42) is released and conveys the solidified moulding away in a specifically oriented position out of the mould (42) by means of a conveyor system, (1) as claimed in one or more of claims 1 to 31.

## Revendications

1. Installation de transport (1) pour des pièces moulées, notamment pour des pièces moulées par injection (3), avec plusieurs porte-pièces (5) déplaçables par une installation d'entraînement (4) le long d'un dispositif de guidage (8) à au moins un outil de formage (42), qui sont pourvus chacun d'au moins un dispositif de réception de pièce (29), où l'outil de formage (42) présente une partie de noyau (43) avec au moins un noyau (45) et une partie de nid (44) avec au moins un nid de moulage (46) et avec un évidement (72) avoisinant, entre la partie de noyau et la partie de nid (43, 44), au moins un nid de moulage (46) et/ou disposé séparément par un espace creux de moule (136, 204) réalisé par le noyau (45) et le nid de moulage (46), et en ce que chacun des dispositifs de réception d'outil (29) pouvant être positionnés dans l'évidement (72) est déplaçable en cadence successivement au nid de moulage (46) et ferme l'évidement (72) pendant l'opération de moulage et/ou est disposé dans celui-ci au moins partiellement, **caractérisée en ce que** des moyens pour tenir et positionner le dispositif de réception d'outil (29) sont prévus dans l'outil de formage (42).

2. Installation de transport selon la revendication 1, **caractérisée en ce que** le dispositif de réception d'outil (29) présente une nervure annulaire (34) s'étendant concentriquement autour d'un axe médian (33) de l'outil de formage (42) et une nervure de liaison (35) s'étendant perpendiculairement à celle-ci, reliée d'une manière relâchable ou non relâchable à la nervure annulaire (34), qui est reliée par un dispositif de liaison (28) au porte-pièce (5).

3. Installation de transport selon la revendication 1 ou 2, **caractérisée en ce que** l'évidement (72) est disposé dans des faces frontales (49, 70) orientées l'une vers l'autre en étant ménagé dans la partie de noyau et/ou la partie de nid (43 ; 44).

4. Installation de transport selon l'une des revendications 1 à 3, **caractérisée en ce qu'**il est ménagé dans la partie de nid (44) une fente (77) qui s'étend de l'évidement (72) jusqu'à un côté inférieur (76) de l'outil de formage (42) respectivement de la partie de nid (44).

5. Installation de transport selon l'une des revendications 1 à 4, **caractérisée en ce que** pendant l'opération d'injection, la nervure annulaire (34) est disposée dans l'évidement (72) et une nervure de liaison (35) du dispositif de réception de pièce (29) dans la fente (77).

6. Installation de transport selon l'une des revendications 1 à 5, **caractérisée en ce que** le dispositif de réception de pièce (29) réalise une partie du nid de moulage (46), notamment des parties de surface du nid de moulage (46).

7. Installation de transport selon l'une des revendications 1 à 6, **caractérisée en ce que** la partie de noyau (43) et/ou le dispositif de réception de pièce (29) présente un creux (47) qui réalise un nid de moulage (46) d'une zone partielle, notamment d'un collet (86) de la pièce moulée par injection (3).

8. Installation de transport selon l'une des revendications 1 à 7, **caractérisée en ce que** l'évidement (72) est formé par des zones évidées (99) disposées dans les parties de noyau et de nid (43, 44), qui sont disposées respectivement à un côté inférieur (76) orienté vers le porte-pièce (5) des parties de noyau (43) et de nid (44).

9. Installation de transport selon la revendication 1, **caractérisée en ce que** le porte-pièce (5) présente un côté supérieur (24) délimitant celui-ci en direction de l'outil de formage (42), sur lequel fait saillie en direction du côté inférieur (7) éloigné de celui-ci un creux (108), et **en ce que**, en partant du creux (108) en direction du côté inférieur (7), un alésage (113) s'étend perpendiculairement au côté supérieur (24).

10. Installation de transport selon la revendication 9, **caractérisée en ce qu'**il est disposé dans le creux (108) le dispositif de réception de pièce (29) de manière relâchable et déplaçable relativement.

11. Installation de transport selon l'une des revendications 1 à 10, **caractérisée en ce que** le dispositif de réception de pièce (29) est réalisé en une forme tronconique et est délimité par des faces planes (115, 116) s'étendant parallèlement l'une à l'autre, éloignées l'une de l'autre, **en ce que** le dispositif de réception de pièce (29) présente un bout rapporté tronconique (119) faisant saillie sur la face plane (115) dans la direction opposée à la face plane (116).

12. Installation de transport selon la revendication 11, **caractérisée en ce que** le bout rapporté (119) présente une forme diminuant d'une manière conique en direction de l'outil de formage (42).

13. Installation de transport selon la revendication 11 ou 12, **caractérisée en ce qu'**à l'état d'injection de l'outil de formage (42), le bout rapporté (119) est disposé dans l'évidement (72), et la face rapportée (123) s'applique à une face plane (73) délimitant l'évidement (72) en direction de l'outil de formage (42).

14. Installation de transport selon l'une des revendications 11 à 13, **caractérisée en ce que** le dispositif de réception de pièce (29) est pourvu d'un alésage (129) qui s'étend au voisinage du bout rapporté (119) en diminuant d'une manière conique en direction de l'outil de formage (42) et dans lequel est disposé un mandrin (130) déplaçable par un dispositif d'entraînement (127) relativement à l'outil de formage (42).

15. Installation de transport selon la revendication 14, **caractérisée en ce que** le mandrin (130) présente une pointe conique (131) qui, à l'état d'injection de l'outil de formage (42), est disposée en dessous d'une face rapportée (123) du bout rapporté (119).

16. Installation de transport selon l'une des revendications 1 à 15, **caractérisée en ce que** la pièce moulée est reliée par une nervure de retenue (132) réalisée en matériau synthétique de manière non déplaçable à un porte-pièce (5) et/ou au dispositif de réception de pièce (29) et est retenue en étant orientée dans une position, et **en ce que** la nervure de retenue (132) fait saillie dans l'alésage (129) et/ou forme une zone partielle de pièce.

17. Installation de transport selon l'une des revendications 1 à 18, **caractérisée en ce que** dans la partie de nid (44), plusieurs évidements (72) sont ménagés qui possèdent des plans de symétrie (139) s'étendant parallèlement les uns aux autres qui sont espacés d'un plan de symétrie (138) d'un ou de plusieurs nids de moulage (46) selon des distances égales (140), mesurées perpendiculairement au plan de symétrie (138).

18. Installation de transport selon la revendication 19, **caractérisée en ce que** les distances (140) correspondent à des écarts de séparation (141) de deux porte-pièces avoisinants (5).

19. Installation de transport selon la revendication 1, **caractérisée en ce que** le dispositif de réception de pièce (29) est réalisé comme dispositif de maniement (143).

20. Installation de transport selon la revendication 19, **caractérisée en ce que** le dispositif de maniement (143) respectivement le dispositif de réception de pièce (29) est disposé d'une manière relâchable ou non relâchable sur une unité de déplacement linéaire (144) qui est disposée au côté supérieur (24) du porte-pièce (5).

21. Installation de transport selon la revendication 20, **caractérisée en ce que** l'unité de déplacement linéaire (144) est formée de préférence par un vérin linéaire (145) qui présente un chariot (146) avec un côté supérieur (147) orienté vers l'outil de formage (42), sur lequel est disposé un dispositif de retenue (148) du dispositif de maniement (143).

22. Installation de transport selon la revendication 21, **caractérisée en ce que** des nervures (31) du dispositif de retenue (148) présentent des ouvertures de palier (149) pour la réception de pivots (151) qui possèdent des axes de pivotement (150) qui s'étendent parallèlement au côté supérieur (147) du chariot (146).

23. Installation de transport selon la revendication 22, **caractérisée en ce que** les axes de pivotement (150) sont espacés les uns des autres d'une distance (142) mesurée parallèlement au côté supérieur (147) et passent chacun à travers un perçage de palier (153), qui sont ménagés dans respectivement une nervure de liaison (35) du dispositif de maniement (143).

24. Installation de transport selon l'une des revendications 1 à 23, **caractérisée en ce que** la nervure de liaison (35) présente un ou plusieurs étriers de serrage (154), qui présentent respectivement par exemple deux prolongements de serrage (155) faisant saillie en direction de la pièce moulée.

25. Installation de transport selon la revendication 24, **caractérisée en ce que** les prolongements de serrage (155), à l'état serré des étriers de serrage (154), s'appliquent à une face extérieure (67) de la pièce moulée.

26. Installation de transport selon la revendication 24 ou 25, **caractérisée en ce que** les étriers de serrage (154) sont logés d'une manière pivotante dans une direction opposée les uns aux autres autour des axes de pivotement (150) dans une position d'ouverture au moyen d'une commande de pivotement (159), en particulier un vérin (160) à effet double, avec des tiges de vérin (162) s'étendant dans la direction opposée.

27. Installation de transport selon la revendication 1, **caractérisée en ce que** le dispositif de réception de pièce (29) est formé par un pivot de réception (174).

28. Installation de transport selon la revendication 27, **caractérisée en ce que** le pivot de réception (174) est logé d'une manière pivotante autour d'un axe de pivotement (176) s'étendant parallèlement à la surface (27) du porte-pièce (5) et perpendiculairement au plan de symétrie (138) dans un dispositif de palier de pivotement (175).

29. Installation de transport selon la revendication 28, **caractérisée en ce que** le dispositif de palier de pivotement (175) présente un palier (188) disposé sur une unité de guidage linéaire (192) et que l'unité de guidage linéaire (192) est formée par un chariot (193) et une ou plusieurs ondes de guidage linéaires (194) qui sont disposées dans des logements de palier (196) d'une manière non déplaçable, relâchable ou non relâchable, qui sont disposées sur la surface (27) du porte-pièce (5).

30. Installation de transport selon la revendication 29, carazctérisée en ce qu'au moins un logement de palier (196) présente une butée (197).

31. Installation de transport selon l'une des revendications 1 à 30, **caractérisée en ce qu'**il est disposé sur le côté inférieur (76) de la partie de noyau (43) un organe d'entraînement (198).

32. Outil de formage (42) pour fabriquer des pièces moulées, en particulier des pièces moulées par injection (3), avec une partie de noyau (43) avec un ou plusieurs noyaux rigides et/ou mobiles (45) et/ou une partie de nid (44) avec au moins un nid de moulage (46), qui sont réalisés d'une manière déplaçable l'une relativement à l'autre, où est disposé entre les parties de noyau et de nid (43, 44) un évidement (72) avoisinant au moins un nid de moulage précité (46) et/ou disposé séparément d'un espace creux de moule (136, 204) formé par le noyau (45) et le nid de moulage (46) pour la réception selon le besoin d'au moins un dispositif de réception de pièce (29) disposé sur un porte-pièce (5), **caractérisé en ce que** le porte-pièce (5) est disposé d'une manière déplaçable avec au moins un dispositif de réception de pièce précité (29) le long d'un dispositif de guidage (8) d'une unité de transport (1) disposée à côté de l'outil de formage (42) selon l'une des revendications 1 à 31.

33. Procédé pour transporter des pièces moulées, notamment des pièces moulées par injection (3), dans lequel un outil de formage (42) constitué d'une partie de noyau (43) et d'une partie de nid (44) est fermé, ensuite le matériau synthétique est introduit dans au moins un espace creux de moule (136, 204) réalisé entre les parties de noyau et de nid (43, 44) et se solidifie et ensuite, l'outil de formage (42), par un déplacement relatif de la partie de nid (44) et de la partie de noyau (43) est ouvert, à la suite de quoi la ou les pièces moulées sont libérées et sont évacuées par une installation de transport (1), où pendant la fermeture de l'outil de formage (42) pour la formation de l'espace creux de moule (136, 204), au moins un dispositif de réception de pièce (29) est positionné dans un évidement (72) dans l'outil de formage (42), **caractérisé en ce qu'**après l'ouverture de l'outil de formage (42), au moins un dispositif de réception de pièce (29) disposé dans l'outil de formage (42) est libéré et, par celui-ci, la pièce moulée solidifiée est évacuée, en étant orientée dans une position, de l'outil de formage (42) au moyen d'une installation de transport (1) selon l'une ou plusieurs des revendications 1 à 31.
